(19) Europäisches Patentamt / European Patent Office / Office européen des brevets

(11) **EP 4 428 183 A1**

(12) **EUROPEAN PATENT APPLICATION**

(43) Date of publication:
**11.09.2024 Bulletin 2024/37**

(21) Application number: **24158728.6**

(22) Date of filing: **20.02.2024**

(51) International Patent Classification (IPC):
**C08J 9/00** (2006.01)　　**C08G 63/91** (2006.01)
**C08J 9/12** (2006.01)

(52) Cooperative Patent Classification (CPC):
(C-Sets available)
**C08J 9/0023; C08G 63/912; C08J 9/0066;
C08J 9/122; C08L 67/04;** C08J 2201/03;
C08J 2367/04　　　　　　　　　　　(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023030482**

(71) Applicant: **Ricoh Company, Ltd.**
**Tokyo 143-8555 (JP)**

(72) Inventors:
• **KUMAI, Yoshimitsu**
**Tokyo, 143-8555 (JP)**
• **HIROKAWA, Yuya**
**Tokyo, 143-8555 (JP)**
• **TAMURA, Risa**
**Tokyo, 143-8555 (JP)**
• **MORIMOTO, Kazuhiro**
**Tokyo, 143-8555 (JP)**

(74) Representative: **Marks & Clerk LLP**
**15 Fetter Lane**
**London EC4A 1BW (GB)**

(54) **FOAM SHEET, METHOD FOR PRODUCING FOAM SHEET, PRODUCT, AND MOLDED PRODUCT**

(57) A foam sheet includes a polylactic acid resin composition that includes a polylactic acid resin and an epoxy group-containing compound including two or more epoxy groups per molecule. The polylactic acid resin has a weight average molecular weight of 180,000 or greater and 320,000 or less. The polylactic acid resin has a terminal hydroxyl group content of 0.3 or greater and 1.4 or less. An amount of the polylactic acid resin is 98% by mass or greater relative to a total amount of organic matter of the foam sheet. The epoxy group-containing compound has an epoxy equivalent of 170 or greater and 350 or less. The foam sheet has cold crystallization enthalpy of 20 J/g or greater and recrystallization enthalpy of 20 J/g or greater.

EP 4 428 183 A1

(52) Cooperative Patent Classification (CPC): (Cont.)

C-Sets
**C08L 67/04, C08K 3/36, C08L 63/00**

**EP 4 428 183 A1**

**Description**

BACKGROUND OF THE INVENTION

1. Field of the Invention

The disclosures herein generally relate to a foam sheet, a method for producing a foam sheet, a product, and a molded product.

2. Description of the Related Art

Plastics are widely available and processed into various shapes of products, such as bags and containers. However, disposal of plastic products after use has been an issue because the plastic products are not easily decomposed in nature. As awareness towards the environmental issues and sustainable society has arisen in recent years, plastic materials that can be produced from biomass materials and have biodegradability (biodegradable biomass plastic materials) have been actively developed.

Among biodegradable biomass plastics, polylactic acid has been expected to be an alternative for non-biodegradable plastics because the polylactic acid has similar characteristics to polystyrene that is readily available. One of usage embodiments of polystyrene is foam polystyrene. Foam polystyrene is obtained by foaming polystyrene to impart characteristics, such as lightness (light in weight) and thermal insulation properties. Such foam polystyrene is widely used. As an environmentally aware alternative for the foam polystyrene, foam polylactic acid using polylactic acid, which is a biodegradable plastic, has been proposed

Polylactic acid can be classified into amorphous polylactic acid and crystalline polylactic acid depending on optical purity of the polylactic acid. Foam crystalline polylactic acid obtained by foaming crystalline polylactic acid has been also known. The foam crystalline polylactic acid is a material achieving a combination of lightness, thermal insulation properties, and thermal resistance. For example, when foam crystalline polylactic acid is used for food packaging containers, the foam crystalline polylactic acid is expected to be a material that can resist heat applied during heating by a microwave, which is a problem for foam polystyrene-based containers, as well as achieving advantages of foam polystyrene-based containers, such as lightness and thermal insulation properties.

However, polylactic acid has a low melt viscosity when melted, and fusion or breakage of air bubbles is likely to occur during foam molding. Therefore, it is difficult to uniformly produce a foamed body at a high expansion ratio. In order to stably carry out foaming of the polylactic acid, various methods have been proposed.

For example, a method for producing a polylactic acid-based resin foamed body has been proposed in Japanese Unexamined Patent Application Publication No. 2011-16941. The proposed method can produce a polylactic acid-based resin foamed body having an excellent surface texture. According to the proposed method, 11 parts by weight to 21 parts by weight of carbon dioxide is supplied to an extruder as a blowing agent relative to 100 parts by weight of a crystalline polylactic acid-based resin to carry out melt-kneading, followed by extruding and foaming to yield a polylactic acid-based resin foamed body having an average pore diameter of from 40 $\mu$m to 250 $\mu$m and an apparent density of from 30 kg/m$^3$ to 100 kg/m$^3$.

When a large amount of the blowing agent is used as described above, however, streaky defects in an appearance of a resulting foam sheet, which is called corrugation, may occur due to rapid expansion of the blowing agent. As a result, the foam sheet may be torn at a section where the defect is formed, when the foam sheet is molded by thermoforming. Moreover, the blowing agent that cannot be retained within the foam sheet is likely to cause breakage of air bubbles so that a liquid may be penetrated into an inner area of the foam sheet from the defects formed at the surface of the foam sheet.

The above-described problems may be overcome by reducing a temperature of kneading and foaming. When such a production method is used, however, crystallinity of a foam sheet is likely to increase, which reduces stretchability of the foam sheet at the time of thermoforming, impairing thermal moldability.

A method for stably providing a foam body having a high expansion ratio using a resin composition including a crystalline polylactic acid-based polymer is disclosed in Japanese Unexamined Patent Application Publication No. 2009-73955. According to the disclosed method, a foam body is formed using a polylactic acid resin composition including 85% by mass or greater of a crystalline polylactic acid resin having a weight average molecular weight of 400,000 to 1,500,000. Moreover, it is disclosed that the polylactic acid resin preferably has a branched-chain structure.

Moreover, a method for providing a foam body having a high expansion ratio using a resin composition including a crystalline polylactic acid-based polymer is disclosed in Japanese Unexamined Patent Application Publication No. 2008-231285. According to the disclosed method, a polylactic acid resin composition suitable for forming a crystalline polylactic acid resin foam sheet having a high expansion ratio is obtained when the polylactic acid resin composition includes a crystalline polylactic acid resin having a weight average molecular weight of 100,000 to 300,000 and an acid

3

value of 10 to 20 (equivalent/weight-ton), and a compound including two or more epoxy functional groups per molecule, where a ratio of a total acid value of the crystalline polylactic acid resin to a total amount of the epoxy functional groups of the epoxy compound is within a certain range.

SUMMARY OF THE INVENTION

In one embodiment, a foam sheet includes a polylactic acid resin composition that includes a polylactic acid resin and an epoxy group-containing compound including two or more epoxy groups per molecule. The polylactic acid resin has a weight average molecular weight of 180,000 or greater and 320,000 or less. The polylactic acid resin has a terminal hydroxyl group content of 0.3 or greater and 1.4 or less. An amount of the polylactic acid resin is 98% by mass or greater relative to a total amount of organic matter of the foam sheet. The epoxy group-containing compound has an epoxy equivalent of 170 or greater and 350 or less. The foam sheet has cold crystallization enthalpy of 20 J/g or greater. The foam sheet has recrystallization enthalpy of 20 J/g or greater.

BRIEF DESCRIPTION OF THE DRAWINGS

Fig. 1 is a schematic view illustrating a profile of an outermost surface of the foam sheet of the present invention on a cross section of the foam sheet cut along a transverse direction (TD) of the foam sheet;
Fig. 2 is a schematic view illustrating an example of a continuous kneader used in the method for producing the foam sheet of the present disclosure; and
Fig. 3 is a schematic view illustrating an example of a tandem type continuous foam sheet production apparatus used in the method for producing the foam sheet of the present disclosure.

DESCRIPTION OF THE PREFERRED EMBODIMENTS

In the following, embodiments of the present invention will be described with reference to the accompanying drawings.

Further, the present invention is not limited to these embodiments, but various variations and modifications may be made without departing from the scope of the present invention.

The foam sheet, the method for producing the foam sheet, the product, and the molded product of the present disclosure will be concretely described hereinafter. The present disclosure is not limited to embodiments described hereinafter. The embodiments may be modified, for example, by substitution with another embodiment, addition, variation, and omission, without departing from the scope and the spirit of the present invention. These modified embodiments are also included within the scope of the present disclosure as long as the embodiments display the functions and effects of the present disclosure.

(Foam sheet)

The foam sheet of the present disclosure includes a polylactic acid resin composition that includes at least a polylactic acid resin and an epoxy group-containing compound including two or more epoxy groups per molecule. The polylactic acid includes a weight average molecular weight of 180,000 or greater and 320,000 or less, The polylactic acid resin has a terminal hydroxyl group content of 0.3 or greater and 1.4 or less. An amount of the polylactic acid resin is 98% by mass or greater relative to a total amount of organic matter of the foam sheet. The epoxy group-containing compound has an epoxy equivalent of 170 or greater and 350 or less. The foam sheet has cold crystallization enthalpy of 20 J/g or greater. The foam sheet has recrystallization enthalpy of 20 J/g or greater.

In both Japanese Unexamined Patent Application Publication Nos. 2009-73955 and 2008-231285, the polylactic acid resin having an intermediate degree of optical purity (a proportion of D-lactic acid in the structure of the polylactic acid resin is approximately 4 mol%) is discussed. Moreover, both literatures disclose a method where extrusion foaming is carried out with a resin temperature of approximately 130°C to obtain a foam sheet. When the polylactic acid resin having the degree of optical purity disclosed in the above-mentioned literatures is used, a crystallization speed of a resulting sheet is likely to slow compared to a foam sheet obtained using a polylactic acid resin having high optical purity (the ratio of D-lactic acid or L-lactic acid is 98 mol% or greater) as disclosed in the present disclosure. When a molded product having thermal resistance is produced with the polylactic acid having the intermediate degree of optical purity, therefore, desired productivity is not achieved in thermoforming.

When the optical purity is increased to the similar degree to the degree of the present disclosure, if a foam sheet is produced in the temperature region disclosed in the above-mentioned literatures, rapid crystallization is caused inside an extruder so that it may be difficult to stably carry out operations. Even if a foam sheet may be produced, in the case where the production is performed at a low temperature, crystallization progresses within the foam sheet so that the resulting foam sheet may have poor thermal moldability.

The present inventors have found the following problems. In order to improve productivity of a molded product having thermal resistance in thermoforming, a polylactic acid resin having high optical purity, which has a high crystallization speed, is preferably used. When an expansion ratio is increased to improve properties, such as thermal insulation properties and strength, in other words, when a foam sheet having a low bulk density is produced, however, rapid crystallization is caused inside an extruder, as a foaming temperature is reduced, because a polylactic acid resin having high optical purity has a fast crystallization speed. Therefore, it may be difficult to stably carry out operations. Even if a foam sheet may be produced, crystallization progresses within the foam sheet when the foam sheet is produced at a low temperature. Therefore, the resulting foam sheet may have poor thermal moldability.

In order to solve the above-described problems, the present inventors have diligently conducted research and have had the following insights. A foam sheet that excels in all of moldability, biodegradability, strength, thermal insulation properties, and thermal resistance is obtained when the foam sheet has the above-described structure. Since the foam sheet of the present disclosure achieves all of desired moldability, biodegradability, strength, thermal insulation properties, and thermal resistance, the foam sheet is suitably used for dishes, packaging containers, and bags, and particularly preferably used as a material for food containers.

The present disclosure aims to provide a foam sheet having excellent moldability, biodegradability, strength, thermal insulation properties, and thermal resistance.

The present disclosure can provide a foam sheet having excellent moldability, biodegradability, strength, thermal insulation properties, and thermal resistance.

The foam sheet of the present disclosure is obtained by foaming the polylactic acid resin composition. Therefore, the foam sheet of the present disclosure may be referred to as a "polylactic acid foam sheet" or "polylactic acid composition sheet." Although the details will be described later, the foam sheet of the present disclosure has excellent thermal resistance, and can be suitably used, for example, as a heat-resistant food container.

The foam sheet of the present disclosure is a sheet obtained by foaming the polylactic acid resin composition and forming into a sheet.

[Physical properties of foam sheet]

The foam sheet is obtained by foaming the polylactic acid resin composition. Therefore, the physical properties of the foam sheet are identical to the physical properties of the polylactic acid resin composition, except the physical properties associated with the heat history or shapes of the foam sheet. Although the details are described later, the physical properties associated with the heat history of the foam sheet include cold crystallization enthalpy, and the physical properties associated with the shape of the foam sheet include a bulk density, a pore diameter, a basis weight, Ra, and RSm.

-Bulk density-

A bulk density of the foam sheet is not particularly limited, and may be appropriately selected according to the intended purpose. The bulk density of the foam sheet is preferably 0.063 g/cm$^3$ or greater and 0.25 g/cm$^3$ or less, more preferably 0.063 g/cm$^3$ or greater and 0.2 g/cm$^3$ or less, and yet more preferably 0.063 g/cm$^3$ or greater and 0.16 g/cm$^3$ or less. When the bulk density of the foam sheet is 0.063 g/cm$^3$ or greater and 0.25 g/cm$^3$ or less, a resulting foam sheet includes a large volume of cells (air bubbles) to exhibit high thermal insulation properties. Moreover, the foam sheet has a sufficient thickness to have the large area moment of inertia so that high flexural rigidity can be achieved.

The bulk density of the foam sheet can be adjusted by an amount of the epoxy group-containing compound including two or more epoxy groups per molecule, a temperature at which the polylactic acid resin composition is melted and kneaded, a temperature of the below-described foaming step (may be referred to as a "foaming temperature" hereinafter) during production of the foam sheet, an amount of a blowing agent, a shape or type of a die, etc. Specifically, the bulk density of the foam sheet can be reduced by increasing an amount of the epoxy group-containing compound including two or more epoxy groups per molecule, melting and kneading the polylactic acid resin composition at a temperature equal to or higher than a temperature (Tm - 20°C) that is lower than a melting point (Tm) of the polylactic acid resin composition by 20°C, reducing a foaming temperature during production of the foam sheet, increasing an amount of the blowing agent, or adjusting an opening area of the die to an appropriate range.

In the present specification, the bulk density of the foam sheet is a value measured in the following manner.

The foam sheet is left to stand for 24 hours or longer in an environment controlled at a temperature of 23°C and relative humidity of 50%, followed by cutting out a test piece of 50 mm × 50 mm from the foam sheet. The test piece is measured by a fully automated densimeter (for example, DSG-1 available from Toyo Seiki Seisaku-sho, Ltd.), and the density displayed on the device is determined as a bulk density. Moreover, the bulk density may be determined according to a buoyancy method.

According to the buoyancy method, a mass (g) of the test piece of the foam sheet is accurately weighed in the atmosphere, then a mass (g) of the test piece of the foam sheet is accurately weighed in water. The bulk density can be calculated from the measured values according to the following equation (1).

```
Bulk density [g/cm³] = density of water [g/cm³] × mass of test
piece in atmosphere [g]/(mass of test piece in atmosphere [g] -
mass of test piece in liquid [g])
```

                                                                Equation (1)

-Pore diameter (median diameter)-

A pore diameter of the foam sheet is not particularly limited, and may be appropriately selected according to the intended purpose. As the pore diameter, a median diameter of pores of the foam sheet is preferably 800 $\mu$m or less, more preferably 500 $\mu$m or less. When the pore diameter (median diameter) of the foam sheet is 800 $\mu$m or less, a foam sheet having uniformity, thermal insulation properties, and appearance (opacity) is likely to be obtained.

A method for measuring the pore diameter (median diameter) of the foam sheet is not particularly limited, and may be appropriately selected according to the intended purpose. For example, the pore diameter (median diameter) of the foam sheet can be determined by analyzing an image captured by a scanning electron microscope (SEM) in the following manner.

For example, the foam sheet is cut by a sharp razor blade (e.g., 76 Razor, available from Nisshin EM Co., Ltd.) to expose a cross section of the foam sheet along a transverse direction (TD). The obtained cross section of the foam sheet is fixed with a carbon tape etc., to provide as a sample for SEM observation. The obtained cross section of the sample is observed under a scanning electron microscope (SEM) (e.g., 3D real surface view microscope, VE-9800, available from KEYENCE CORPORATION). The magnification is adjusted to capture several tens to several hundreds of air bubbles within an observation range (for example, ×50 in the case where the pore diameter is approximately 100 $\mu$m) so that an image suitable for the below-described image analysis is obtained. Optionally, two or more views are captured, and the captured images may be connected to provide the connected image for image analysis. The segmentation of the obtained image is carried out, for example, by image analysis software (for example, MorphoLibJ plugins for Image J) according to the watershed segmentation (Morphological segmentation). At the time of the segmentation, the tolerance is adjusted per image (for example, 60) so that the segmentation is appropriately carried out. The dividing line of the segment is output as a binary image to determine a distribution of areas of air bubbles by a particle diameter analysis function of the image analysis software. During the determination of the distribution, air bubbles in contact with the edges of the image are excluded from the analysis. The cumulative distribution of the areas of the air bubbles is prepared by a spreadsheet to determine an area at 50% of the cumulative distribution. A circle equivalent diameter of the area at 50% of the cumulative distribution is calculated and determined as a pore diameter (median diameter).

-Basis weight-

A basis weight of the foam sheet is not particularly limited, and may be appropriately selected according to the intended purpose. In the case where the foam sheet is used as a food packaging container, the basis weight of the foam sheet is preferably 100 g/m$^2$ or greater and 300 g/m$^2$ or less, more preferably 200 g/m$^2$ or greater and 280 g/m$^2$ or less, and yet more preferably 250 g/m$^2$ or greater and 280 g/m$^2$ or less. When the basis weight of the foam sheet is 100 g/m$^2$ or greater and 300 g/m$^2$ or less, a foam sheet achieving both lightness (light in weight) and strength may be obtained.

A method for measuring the basis weight of the foam sheet of the present disclosure is not particularly limited. For example, the basis weight of the foam sheet can be measured in the following manner.

The foam sheet is left to stand for 24 hours or longer in an environment controlled at a temperature of 23°C and relative humidity of 50%, followed by cutting out a test piece of 50 mm × 50 mm from the foam sheet. A mass of the test piece is measured by a balance. The basis weight of the foam sheet is calculated from the measured mass according to the following equation (2). The basis weight of the foam sheet is the arithmetic mean of values measured at three or more points along the extrusion direction of the foam sheet (MD) and three or more points along the direction orthogonal to the MD (TD).

$$\text{Basis weight [g/m}^2] = \text{measured mass [g]}/(0.05 \text{ m} \times 0.05 \text{ m})$$

$$\text{Equation (2)}$$

In the present specification, the term "machine direction (MD)" encompasses a production direction (extrusion direction) of the foam sheet, and the term "transverse direction (TD)" encompasses the direction perpendicular to the MD. The TD of the foam sheet also encompasses a width direction of the foam sheet.

-Outermost surface profile of foam sheet-

The profile of at least one surface of the foam sheet on a cross section along the thickness direction (THD) and the transverse direction (TD) of the foam sheet largely affects occurrences of defective molding, such as breakages during molding of the foam sheet, as described above. Especially when creases are formed at the surface of the foam sheet to cause corrugation, defective molding is likely to occur during molding of the foam sheet. However, corrugation that may be caused in a surface of the foam sheet of the present disclosure has a small amplitude of the waveform form creating the creases.

--Ratio [Ra/RSm]--

The creases in the corrugated surface of the foam sheet can be represented by a ratio [Ra/RSm]. The Ra is an arithmetic average roughness calculated according to JIS B 0601:2013 (Geometrical Product Specifications (GPS)-surface texture: Profile method-terminologies, definitions, and surface texture parameters) and the RSm is an average length of a roughness profile element calculated according to JIS B 0601:2013. The Ra and the RSm are measured on a profile of at least one surface of the foam sheet on a cross section cut along a thickness direction (THD) of the foam sheet and a direction (TD) perpendicular to an extrusion direction of the foam sheet, and the profile is taken along the direction (TD) perpendicular to the extrusion direction of the foam sheet.

The profile of at least one surface of the foam sheet on the cross section along the thickness direction (THD) and the transverse direction (TD) of the foam sheet is specifically described with reference to a drawing.

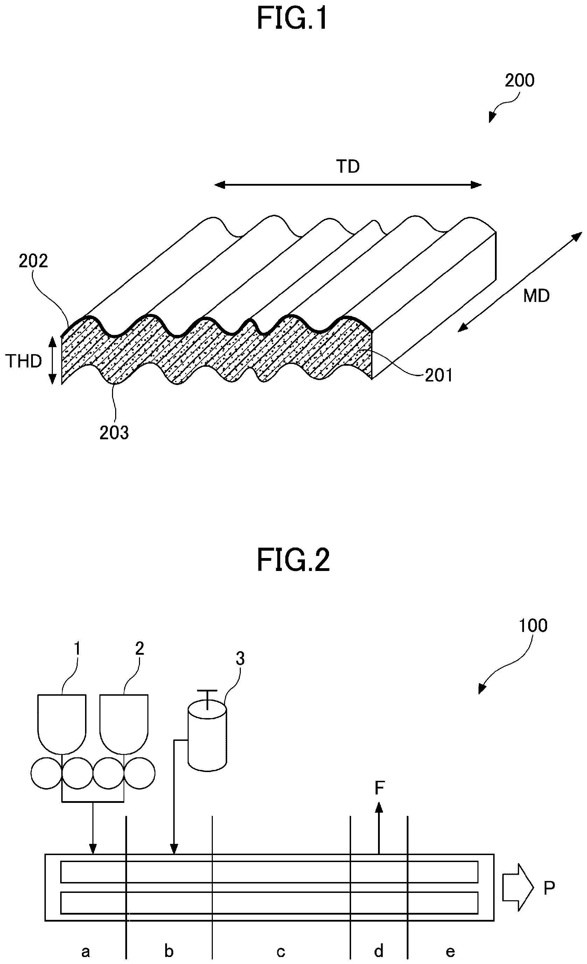

Fig. 1 is a schematic view (perspective view) illustrating a profile of at least one surface of the foam sheet of the present disclosure on a cross section along the thickness direction (THD) and the transverse direction (TD) of the foam sheet. In Fig. 1, the up-down direction is the thickness direction (THD) of the foam sheet 200, the left-right direction is the transverse direction (TD) of the foam sheet 200, and the depth direction is the machine direction (MD) of the foam sheet 200. As indicated with a thick line, the profile of at least one surface (outermost surface) 202 of the foam sheet 200 on the cross section 201 along the thickness direction (THD) and the transverse direction (TD) of the foam sheet 200 has creases (a waveform) of corrugation (peaks and valleys of the waveform, periodical amplitudes of the waveform). In the present specification, one surface (outermost surface) 202 of the foam sheet 200 has been described, but the other surface (outermost surface) of the foam sheet 200 also has the same profile.

In the present specification, the profile of at least one surface of the foam sheet on the cross section along the THD and TD of the foam sheet may be referred to as an "outermost surface profile of the cross section of the foam sheet along TD" hereinafter.

The ratio [Ra/RSm] of the arithmetic average roughness R calculated according to JIS B 0601:2013 and the average length RSm of the roughness profile element calculated according to JIS B 0601:2013, both of which are measured on the outermost surface profile of the cross section of the foam sheet along the TD, is not particularly limited, and may be appropriately selected according to the intended purpose. The ratio [Ra/RSm] is preferably 0.050 or less, more preferably 0.030 or less, and yet more preferably 0.015 or less. The ratio [Ra/RSm] of 0.050 or less indicates that the amplitude of the waveform of the corrugation of the outermost surface of the foam sheet on the cross section of the foam sheet along the TD is very small. As the amplitude is very small, there are not many points at which breakages may occur during molding of the foam sheet so that occurrences of defective molding can be minimized.

--Arithmetic average roughness Ra--

The arithmetic average roughness Ra calculated according to JIS B 0601:2013 on the outermost surface profile of the cross section of the foam sheet along the TD (may be simply referred to as the "arithmetic average roughness Ra" hereinafter) correlates with the degree of the amplitude of the waveform of the corrugation of the foam sheet. As a value of the arithmetic average roughness Ra increases, the foam sheet has more noticeable creases (waveform) of the corrugation, and such creases may act as points at which breakages occur during molding of the foam sheet, leading to defective molding.

The arithmetic average roughness Ra is not particularly limited, and may be appropriately selected according to the intended purpose. The arithmetic average roughness Ra is preferably 0.15 mm or less, more preferably 0.08 mm or less. When the arithmetic average roughness Ra is 0.15 mm or less, occurrences of defective molding can be minimized during molding of the foam sheet.

--Average length RSm of roughness profile--

The average length RSm of the roughness profile element calculated according to JIS B 0601:2013 on the outermost surface profile of the cross section of the foam sheet along the TD (may be simply referred to as the "average length RSm of the roughness profile element" hereinafter) indicates a cycle of the waveform (creases) of the corrugation of the foam sheet. When the average length RSm of the roughness profile element is small, the cycle of the waveform of the corrugation of the foam sheet is short. The shorter cycle indicates the sharper change in height of the waveform (creases), and such creases may act as points at which breakages occur during molding of the foam sheet, leading to defective molding.

The average length RSm of the roughness profile element is not particularly limited, and may be appropriately selected according to the intended purpose. The average length RSm is preferably 4.0 mm or greater, more preferably 5.0 mm or greater. When the average length RSm of the roughness profile element is 4.0 mm or greater, molding failures during molding of the foam sheet can be minimized.

In the present disclosure, the outermost surface profile of the cross section of the foam sheet along the TD can be measured by a laser microscope or a 3D measurement system. The arithmetic average roughness Ra and the average length RSm of the roughness profile element can be calculated by software installed in the laser microscope or 3D measurement system to measure the outermost surface profile of the cross section of the foam sheet along the TD. A measuring device and measuring conditions are not particularly limited. For example, the measurement may be carried out in the following measuring method.

As a preparation method for a sample used for a measurement, first, a central part of the foam sheet relative to the TD is cut into a piece in the shape of a square of 5 cm × 5 cm, and the cut piece of the foam sheet is fixed on a stage of a laser microscope or 3D measurement system using a double-sided tape so that the cut piece of the foam sheet does not lift up.

The factor for causing defective molding during molding of the foam sheet is, particularly, a wave component having a short cycle and a large difference in height within the outermost surface profile of the cross section of the foam sheet along the TD. Conversely, a wave component having a long cycle within the outermost surface profile of the cross section of the foam sheet along the TD does not largely affect occurrences of defective molding during molding of the foam sheet. Accordingly, the measurement of the arithmetic average roughness Ra and the average length RSm of the roughness profile element is preferably carried out by excluding the influence of wave components having long cycles. When the average length RSm of the roughness profile element is evaluated, if values of 10 mm or greater are measured, the measurement is performed by setting the cutoff ($\lambda$c) of the wave component at 10 mm.

In the present specification, the arithmetic average roughness Ra and the average length RSm of the roughness profile element of the foam sheet are values calculated according to JIS B 0601:2013. Specifically, the arithmetic average roughness Ra and the average length RSm of the roughness profile element can be calculated by observing the outermost surface profile of the cross section of the foam sheet along the TD by the following measuring device under the following measuring conditions, and calculating using a software installed in the device. In the present specification, the arithmetic average roughness Ra and the average length RSm of the roughness profile element are each an average value of three or more values measured from three or more samples prepared by varying a position of the foam sheet from which each sample is cut out during the preparation of the samples.

[[Measuring device and measuring conditions]]

    Device: 3D Measurement System VR-3200 (available from KEYENCE CORPORATION)
    Magnification: ×12
    Measuring mode: standard
    Measuring direction: both sides
    Adjustment of brightness for measurement: automatic (set value: 80)
    Setting of standard plane: performing by selecting the × direction and the y direction of the image

-Cold crystallization enthalpy-

The cold crystallization enthalpy of the foam sheet is 20 J/g or greater, preferably 30 J/g or greater. When the cold crystallization enthalpy of the foam sheet is 20 J/g or greater, the foam sheet is adequately stretched during thermoforming so that a breakage of a molded product can be minimized, and the foam sheet suitably follows a shape of a mold so that a desired shape is formed.

In the thermoforming, the foam sheet is stretched at a temperature equal to or higher than a glass transition temperature of the polylactic acid resin composition. As the degree of crystallinity of the foam sheet increases, elongation at break of the foam sheet is likely to decrease. When the cold crystallization enthalpy of the foam sheet is less than 20 J/g, the foam sheet is not adequately stretched during thermoforming so that a breakage of a molded product may occur, and the foam sheet may not follow a shape of a mold so that a desired shape may not be formed. The upper limit of the cold crystallization enthalpy of the foam sheet is not particularly limited, and may be appropriately selected according to the intended purpose. The upper limit of the cold crystallization enthalpy of the foam sheet is approximately 50 J/g or less.

The cold crystallization enthalpy of the foam sheet can be adjusted to the above-mentioned preferred range by appropriately setting a temperature of the entire production apparatus of the foam sheet or cooling the extruded foam sheet. Although it may depend on a concentration of the blowing agent in the foam sheet or kinds or amounts of components constituting the polylactic acid resin composition, the cold crystallization enthalpy of the foam sheet may be adjusted to the above-mentioned preferred range by setting the minimum temperature of the foam sheet production apparatus at a temperature that is lower than a melting point (Tm) of the polylactic acid resin by 20°C, i.e., [Tm - 20°C], or higher, and rapidly cooling the extruded foam sheet immediately after the extrusion.

A method for cooling the foam sheet is not particularly limited, and any methods available in the related art may be used. Examples of the method include: a method where a cylindrical foam body ejected from a die is placed around a cooled mandrel to cool the foam body in the below-described method for producing the foam sheet; and a method where cooling air is blown onto an outer circumference of a cylindrical foam body in the below-described method for producing the foam sheet.

In the present specification, the cold crystallization enthalpy of the foam sheet can be determined by differential scanning calorimetry (DSC) according to JIS K 7122:2012 (Testing Methods for Heat of Transitions of Plastics).

Specifically, approximately 5 mg to approximately 10 mg of the foam sheet is collected, and the collected foam sheet is pressed on a hot plate heated at 65°C with a round copper bar (diameter of approximately 20 mm, similarly heated at 65°C) (with a load of approximately 500 gf) for 1 second to 3 seconds to flatten the foam sheet to prepare a sample. The flattening of the foam sheet is carried out to improve thermal contact between the sample and a sample pan to accurately measure cold crystallization enthalpy. The sample is measured by the following measuring device under the following measuring conditions, and is analyzed by the following analysis method. In the present disclosure, the cold crystallization enthalpy is the arithmetic mean of the results obtained by performing the series of processes from the preparation of the sample to the analysis five times.

[[Measuring device and measuring conditions]]

Device: Q-2000 (available from TA Instruments Japan Inc.) Temperature program: Scanning from 10°C to 200°C at a heating rate of 10 °C/min (1st heating).

Analysis of cold crystallization enthalpy: The area of the exothermic peak derived from crystallization observed in the range of 60°C to 100°C within the 1st heating is determined by integration, and the area is determined as cold crystallization enthalpy. The baseline of the integration is a straight line connecting the points on the curve before and after the exothermic peak.

-Cold crystallization temperature-

A cold crystallization temperature of the foam sheet is not particularly limited, and may be appropriately selected according to the intended purpose. The cold crystallization temperature of the foam sheet is preferably from 70°C to 100°C, more preferably from 75°C to 85°C. When the cold crystallization temperature of the foam sheet is 70°C or higher, it is advantageous in view of storage stability and moldability because progress of crystallization can be suppressed during storage of the foam sheet. When the cold crystallization temperature of the foam sheet is 100°C or lower, it is advantageous in view of productivity in thermoforming and thermal resistance.

The cold crystallization temperature of the foam sheet can be adjusted by increasing optical purity of the polylactic acid resin, or adding a component serving as a crystal nucleating agent (facilitating formation of crystal nuclei), or adding a component serving as a crystallization accelerator (accelerating growth of crystal nuclei), or adding the epoxy group-containing compound including two or more epoxy groups per molecule.

The cold crystallization temperature of the foam sheet can be determined by differential scanning calorimetry (DSC) according to JIS K 7121:2012 (Testing method for transition temperatures of plastics).

Specifically, from 5 mg to 10 mg of a sample that is cut out from the foam sheet is placed in a container of a differential scanning calorimeter (e.g., Q-2000, available from TA Instruments Japan Inc.), and the sample is heated from 10°C to 200°C at a heating rate of 10 °C/min. A peak top temperature of an exothermic peak observed at a temperature range equal to or higher than a glass transition temperature of the foam sheet is measured as a cold crystallization temperature of the foam sheet.

-Recrystallization enthalpy-

The recrystallization enthalpy of the foam sheet is 20 J/g or greater, preferably 35 J/g or greater, and more preferably 40 J/g or greater. When the recrystallization enthalpy of the foam sheet is less than 20 J/g, as the foam sheet is provided for thermoforming, it may take a long time to complete crystallization so that productivity is low, or crystallization does not progress so that thermal resistance may not be imparted to a molded product. The polylactic acid resin composition having high crystallinity means that recrystallization enthalpy of the foam sheet as measured by differential scanning calorimetry (DSC) is 20 J/g or greater. When the recrystallization enthalpy of the foam sheet is 20 J/g or greater, a shape of the foam sheet on a mold can be fixed during thermoforming through crystallization, and thermal resistance can be imparted to a molded product within a realistic molding time period so that excellent productivity and thermal resistance of the foam sheet can be achieved.

The upper limit of the recrystallization enthalpy of the foam sheet is not particularly limited. The upper limit of the recrystallization enthalpy is preferably 50 J/g or less, more preferably 45 J/g or less. The recrystallization enthalpy of the foam sheet can be adjusted by increasing optical purity of the polylactic acid resin, or adding a component serving as a crystal nucleating agent (facilitating formation of crystal nuclei), or adding a component serving as a crystallization accelerator (accelerating growth of crystal nuclei), or using an epoxy group-containing (meth)acryl monomer and a styrene monomer as a chain extender (crosslinking agent) (an epoxy functional (meth)acrylstyrene-based chain extender). Among the above-listed examples, the recrystallization enthalpy of the foam sheet is preferably adjusted by increasing the optical purity of the polylactic acid resin as well as using the epoxy functional (meth)acryl-styrene-based chain extender in view of suitable foamability of the polylactic acid resin composition, recyclability of the foam sheet, environmental adaptability, and the cost.

In extrusion molding of the polylactic acid resin composition having excellent crystallinity as described above, it is important to maintain the temperature from kneading to extrusion, excluding a material feeding area at a temperature equal to or higher than a melting point of the polylactic acid resin composition, or equal to or higher than a recrystallization temperature of the polylactic acid resin composition. The recrystallization temperature of the polylactic acid resin composition may vary depending on conditions (a temperature and pressure) inside an extruder, heat history or shear history, an amount of a blowing agent, and amounts and kinds of constituent components of the polylactic acid resin composition, thus the recrystallization temperature of the polylactic acid resin composition cannot be set unconditionally. In the present disclosure, the temperature from the kneading to the extrusion is preferably equal to or higher than a temperature [Tm - 20°C] that is lower than the melting point (Tm) of the polylactic acid resin composition by 20°C.

When the temperature from the kneading to the extrusion is lower than the temperature [Tm - 20°C] that is lower than the melting point (Tm) of the polylactic acid resin composition by 20°C, the polylactic acid resin composition is cooled to easily adjust the viscosity of the polylactic acid resin composition to suit foaming, but a supercooling degree (a deviation between the melting point and the resin temperature) increases. Therefore, there may be a risk such that operation of an apparatus may be stopped due to drastic crystallization inside the apparatus, or crystallization progresses in an obtained foam sheet, which may impair thermoforming properties. When the temperature from the kneading and the extrusion is equal to or higher than a temperature [Tm - 20°C] that is lower than the melting point (Tm) of the polylactic acid resin composition by 20°C, a risk of unintentional termination of operation of the apparatus due to crystallization can be minimized, an obtained foam sheet suitably has a low crystallinity, and a foam sheet having excellent thermoforming properties can be obtained. The crystallinity of the foam sheet can be evaluated with cold crystallization enthalpy as measured by DSC.

In the present specification, the recrystallization enthalpy of the foam sheet can be determined by differential scanning calorimetry according to JIS K 7122:2012 (Testing Methods for Heat of Transitions of Plastics). A device used for the DSC is not particularly limited. For example, the recrystallization enthalpy of the foam sheet can be measured in the following manner.

Specifically, approximately 5 mg to approximately 10 mg of the foam sheet is collected, and the collected foam sheet is pressed on a hot plate heated at 65°C with a round copper bar (diameter of approximately 20 mm, similarly heated at 65°C) (with a load of approximately 500 gf) for 1 second to 3 seconds to flatten the foam sheet to prepare a sample. The flattening of the foam sheet is carried out to improve thermal contact between the sample and a sample pan to accurately measure recrystallization enthalpy. The sample is measured by the following measuring device under the following measuring conditions, and is analyzed by the following analysis method. In the present disclosure, the recrystallization enthalpy is the arithmetic mean of the results obtained by performing the series of processes from the preparation of the sample to the analysis five times.

[[Measuring device and measuring conditions]]

Device: Q-2000 (available from TA Instruments Japan Inc.)
Temperature program: Scanning from 10°C to 200°C at a heating rate of 10 °C/min (1st heating), and retaining the temperature at 200°C for 1 minute, followed by cooling from 200°C to 25°C at a cooling rate of 10 °C/min (1st cooling). Analysis of recrystallization enthalpy: The area of the exothermic peak derived from crystallization observed during the 1st cooling is determined by integration, and the area is determined as recrystallization enthalpy. In the present disclosure, the position of the exothermic peak derived from crystallization is within the range of approximately 100°C to approximately 130°C. The baseline of the integration is a straight line connecting the points on the curve before and after the exothermic peak.

-Recrystallization temperature-

A recrystallization temperature of the foam sheet is not particularly limited, and may be appropriately selected according to the intended purpose. The recrystallization temperature of the foam sheet is preferably from 120°C to 150°C, more preferably from 130°C to 145°C. The foam sheet having the recrystallization temperature of 120°C or higher indicates that the polylactic acid resin has a high crystallization speed. The foam sheet having the recrystallization temperature of 120°C or higher is advantageous in view of productivity in thermoforming and thermal resistance of a molded product because crystallization progresses promptly when the foam sheet is provided for thermoforming. The foam sheet having the recrystallization temperature of 150°C or lower is advantageous in view of thermoforming because crystallization of the foam sheet can be suppressed during production of the foam sheet.

The recrystallization temperature of the foam sheet can be adjusted by increasing optical purity of the polylactic acid resin, or adding a component serving as a crystal nucleating agent (facilitating formation of crystal nuclei), or adding a component serving as a crystallization accelerator (accelerating growth of crystal nuclei), or adding the epoxy group-containing compound including two or more epoxy groups per molecule.

The recrystallization temperature of the foam sheet can be determined by differential scanning calorimetry (DSC) according to JIS K 7121:2012 (Testing method for transition temperatures of plastics).

Specifically, from 5 mg to 10 mg of a sample that is cut out from the foam sheet is placed in a container of a differential scanning calorimeter (e.g., Q-2000, available from TA Instruments Japan Inc.). Then, the sample is heated from 10°C to 200°C at a heating rate of 10 °C/min, and the temperature is retained at 200°C for 10 minutes, followed by cooling from 200°C to 10°C at a cooling rate of 10 °C/min. A peak top temperature of an exothermic peak is measured as a recrystallization temperature of the foam sheet.

-Melting point-

A melting point of the foam sheet can be determined by differential scanning calorimetry (DSC) according to JIS K 7121:2012 (Testing method for transition temperatures of plastics).

Specifically, a DSC measurement for the melting point of the foam sheet is performed, for example, by a differential scanning calorimeter (for example, Q-2000, available from TA Instruments Japan Inc.). A sample of the foam sheet (from 5 mg to 10 mg) is placed in a container of the differential scanning calorimeter, and the sample is heated to 200°C at a heating rate of 10 °C/min to measure the melting point.

A peak top temperature (peak melting temperature [Tpm]) of an endothermic peak, which is observed at the higher temperature side relative to the glass transition temperature and is derived from melting of crystals, is determined as a melting point. In a case where two or more endothermic peaks are observed at the higher temperature side relative to the glass transition temperature, a peak top temperature of the peak having the largest area is determined as a melting point of the foam sheet. The melting point of the foam sheet is in the range of approximately 160°C to approximately 190°C.

-Glass transition temperature-

A glass transition temperature of the foam sheet can be determined by differential scanning calorimetry (DSC) according to JIS K 7121:2012 (Testing method for transition temperatures of plastics).

Specifically, a DSC measurement for the glass transition temperature of the foam sheet is performed, for example, by a differential scanning calorimeter (for example, Q-2000, available from TA Instruments Japan Inc.). A sample (from 5 mg to 10 mg) that is cut out from the foam sheet is placed in a container of the differential scanning calorimeter, and the sample is heated to from 10°C to 200°C at a heating rate of 10 °C/min to measure the glass transition temperature.

In the present specification, the term "glass transition temperature" encompasses an extrapolated onset temperature (an initiation glass transition temperature (Tig)) described in JIS K 7121:2012. The glass transition temperature of the foam sheet is in the range of from approximately 55°C to approximately 70°C.

-Weight average molecular weight (Mw)-

A weight average molecular weight (Mw) of the foam sheet is not particularly limited, and may be appropriately selected according to the intended purpose. The weight average molecular weight (Mw) of the foam sheet is preferably 230,000 or greater and 600,000 or less, more preferably 250,000 or greater and 400,000 or less. When the weight average molecular weight (Mw) of the foam sheet is 230,000 or greater and 600,000 or less, the melt viscosity of the foam sheet is suitable for foaming to improve an expansion ratio so that suitable thermal insulation properties of the foam sheet are achieved.

The weight average molecular weight (Mw) of the foam sheet can be measured by gel permeation chromatography (GPC). The weight average molecular weight (Mw) of the foam sheet is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight: 397,000), F-80 (weight average molecular weight: 707,000), and F-128 (weight average molecular weight: 1,110,000), all available from Tosoh Corporation) as the standards.

A sample provided for the GPC is prepared in the following manner. The foam sheet and chloroform are mixed so that a concentration of the foam sheet is approximately 2 mg/mL. The resulting mixture is shaken by a table top shaker (for example, MSI-60 available from AS ONE Corporation) for about half a day. After confirming that the foam sheet is dissolved, the resulting solution is filtered with a 0.45 $\mu$m-membrane filter to collect a filtrate. The collected filtrate is used as a sample. In the case where the foam sheet is not easily dissolved, the mixture of the foam sheet and chloroform is heated at a temperature equal to or lower than the boiling point of chloroform to dissolve the foam sheet. A measuring device and measuring conditions of the GPC are not particularly limited. For example, the sample prepared in the above-described manner is subjected to a GPC measurement under the following conditions to measure a weight average molecular weight (Mw) of the foam sheet. In the case where two or more components (peaks) are observed on a GPC elution curve obtained by plotting a refractive index relative to a retention time, a weight average molecular weight of the component exhibiting the maximum strength is analyzed, and the obtained weight molecular weight is determined as a weight average molecular weight of the foam sheet.

[[Measuring device and measuring conditions]]

Device: HLC-8320GPC (available from Tosoh Techno-System, Inc.) Columns: TSKgel$^{®}$ guard column SuperHZ-L and 4 columns of TSKgel SuperHZM-M
Detector: RI
Measuring temperature: 40°C
Mobile phase: chloroform
Flow rate: 0.45 mL/min
Injection amount: 20 $\mu$L

-Melt viscosity-

A melt viscosity of the foam sheet at 190°C is not particularly limited, and may be appropriately selected according to the intended purpose. The melt viscosity of the foam sheet at 190°C is preferably 10,000 Pa·s or greater and 40,000 Pa·s or less. When the melt viscosity of the foam sheet is 10,000 Pa·s or greater, a sheet having a low bulk density and excellent thermal insulation properties, strength, and surface properties may be obtained with a low crystallinity. When the melt viscosity of the foam sheet is 40,000 Pa·s or less, suitable productivity is achieved because the load applied to a foaming device during the production of the foam sheet is low.

The melt viscosity of the foam sheet can be measured, for example, by weighing 1.5 g of the foam sheet, drying the collected foam sheet in a dryer of 80°C for two hours to prepare a sample, and measuring the sample by a flow tester under the following measuring conditions.

[[Measuring device and measuring conditions]]

Device: CFT-100EX (available from Shimadzu Corporation)
Test conditions:

Constant temperature method
Test temperature: 190°C
Test force: 40 kgf
Heat remaining time: 180 seconds
Diameter of die orifice: 1 mm
Length of die: 1 mm

Analysis: the installed software, CFT-EX, is used, and a melt viscosity is calculated with the following calculation parameters.
Calculation parameters:

Limiting method
Calculation start point: 3.0 mm
Calculation end point: 7.0 mm
Sample density: 1 g/cm$^3$

Examples of a method for adjusting the melt viscosity of the foam sheet to the above-mentioned preferred range include a method where the polylactic acid resin having properties disclosed in the present disclosure and the epoxy group-containing compound including two or more epoxy groups per molecule are subjected to melt kneading (reactive extrusion) to obtain a foam sheet. The melt viscosity of the foam sheet may significantly vary depending on the temperature and time period from kneading to extrusion. A section where a temperature is set at 200°C or higher and 240°C or lower, more preferably 220°C or higher and 240°C or lower, is preferably provided in the kneading step described later.

<Polylactic acid resin composition>

In the present specification, the term "polylactic acid resin composition" encompasses a composition before being foamed.
The polylactic acid resin composition includes at least a polylactic acid resin and an epoxy group-containing compound including two or more epoxy groups per molecule. The polylactic acid resin composition preferably further includes inorganic particles, and may further include other components, as necessary.

<<Polylactic acid resin>>

Since the polylactic acid resin is biodegradable and is decomposed by the actions of microorganisms, the polylactic acid resin has attracted attention as an environmentally friendly polymer material that has a low impact on the environment (see "Structure, properties, and biodegradability of aliphatic polyesters" Yoshio Inoue, POLYMERS, 2001, Vol. 50, No. 6, pp. 374-377). Examples of the polylactic acid resin include copolymers (DL-lactic acid) of D-lactic acid and L-lactic acid; homopolymers of D-lactic acid or L-lactic acid; and polymers obtained through ring-opening polymerization of at least one lactide selected from the group consisting of D-lactide, L-lactide, and DL-lactide. The above-listed examples may be used alone or in combination. The polylactic acid resin may be suitably synthesized for use, or appropriately selected from commercial products.
Synthesis of the polylactic acid resin may be carried out according to any methods available in the related art. Examples of the synthesis method include: a method where a lactic acid is used as a starting material to generate a lactide, and the lactide is polymerized through ring-opening polymerization using an initiator, such as alcohol; and a method where a lactic acid is directly polymerized through dehydration synthesis or a condensation reaction.
For the synthesis of the polylactic acid resin, in addition to the above-mentioned monomers, an initiator, a catalyst, an antioxidant, or an end capping agent may be used.
Examples of the initiator include water and alcohol including one or more active hydrogen groups.
The alcohol including one or more active hydrogen groups is not particularly limited, and may be appropriately selected according to the intended purpose. Examples of the alcohol including one or more active hydrogen groups include aliphatic alcohols, polyalkylene glycols, and multivalent alcohols. The above-listed examples may be used alone or in combination.

The multivalent alcohols are not particularly limited, and may be appropriately selected according to the intended purpose. Examples of the multivalent alcohols include glycerin, trimethylolpropane, 1,4-cyclohexanedimethanol, neopentyl glycol, and erythritol. The above-listed examples may be used alone or in combination.

[Physical properties of polylactic acid resin]

The polylactic acid resin has high crystallinity, and imparts a high melt viscosity to a polylactic acid resin composition when the polylactic acid resin is reacted with the epoxy group-containing compound including two or more epoxy groups per molecule. Characteristics of the polylactic acid resin will be described hereinafter.

-Optical isomer-

When a copolymer of D-lactic acid and L-lactic acid (DL-lactic acid), or a ring-opening polymer of at least one lactide selected from the group consisting of D-lactide, L-lactide, and DL-lactide is used as the polylactic acid resin, as an amount of the optical isomer, the D-isomer or the L-isomer, whichever is smaller, decreases, crystallinity of the polylactic acid resin may increase to elevate a melting point or crystallization speed. As an amount of the optical isomer, the D-isomer or the L-isomer, whichever is smaller, increases, crystallinity of the polylactic acid resin is likely to decrease to eventually become amorphous.

In the present disclosure, it is important that sufficient thermal resistance is imparted to a foam sheet by crystallization occurred due to foam growth during foaming. To this end, a molar ratio of the D-lactic acid or L-lactic acid that is a constituent monomer unit of the polylactic acid resin included in the polylactic acid resin composition is 98 mol% or greater, and preferably 99 mol% or greater in the polylactic acid resin. Therefore, a polylactic acid resin including only one of the optical isomers, the D-lactic acid or the L-lactic acid, may be used as the polylactic acid resin. When the amount of the D-lactic acid or L-lactic acid that is a constituent monomer unit of the polylactic acid resin is less than 98 mol% in the polylactic acid resin, a molded product obtained by molding the foam sheet of the polylactic acid resin composition does not have suitable thermal resistance, or desired productivity may not be achieved in thermoforming even if the molded product is formed. When an amount of the D-lactic acid or L-lactic acid that is a constituent monomer unit of the polylactic acid resin is 98 mol% or greater in the polylactic acid resin, the crystallization speed is increased so that crystallization progresses promptly during thermoforming to improve thermal resistance of a molded product and productivity in thermoforming.

In the case where polylactic acid is obtained through dehydration condensation of lactic acid, a ratio of one of optical isomers, D-lactic acid or L-lactic acid, used for polymerization is increased to adjust the molar ratio of the D-lactic acid or L-lactic acid that is a constituent monomer unit of the polylactic acid resin in the polylactic acid resin composition to 98 mol% or greater. In the case where polylactic acid is obtained through ring-opening polymerization of lactide, a ratio of one of D-lactide and L-lactide among one or two or more lactides selected from D-lactide, L-lactide, and DL-lactide used for polymerization is increased to adjust the molar ratio of the D-lactic acid or L-lactic acid that is a constituent monomer unit of the polylactic acid resin in the polylactic acid resin composition to 98 mol% or greater.

A ratio of the D-lactic acid or L-lactic acid that is a constituent monomer unit of the polylactic acid resin can be confirmed by liquid chromatography using a chiral column. A measuring device and measuring conditions for the liquid chromatography are not particularly limited. For example, the measurement may be performed in the following manner.

Specifically, the foam sheet is frozen and ground to prepare a powder of the foam sheet. Two hundred milligrams (200 mg) of the obtained powder of the foam sheet is weighed in an Erlenmeyer flask, followed by adding 30 mL of 1 N sodium hydroxide aqueous solution. The resulting mixture is heated at 65°C, while shaking the mixture, to completely dissolve the polylactic acid resin contained in the foam sheet. Subsequently, the pH of the resulting solution is adjusted to the range of 4 to 7 with 1 N hydrochloric acid, and the resulting solution is diluted to the predetermined volume using a volumetric flask to obtain a polylactic acid resin solution. The polylactic acid resin solution is filtered with a membrane filter of 0.45 $\mu$m, followed by analyzing with a liquid chromatograph. An area ratio is calculated from peaks derived from the D-lactic acid and the L-lactic acid based on the obtained chart, and the area ratio is determined as an abundance ratio to calculate an amount of the D-lactic acid and an amount of the L-lactic acid. The above-described series of processes is performed three times. An arithmetic mean of the measured values is determined as each of an amount of the D-lactic acid and an amount of the L-lactic acid constituting the polylactic acid resin in the foam sheet.

[[Measuring device and measuring conditions]]

High performance liquid chromatography (HPLC) device (liquid chromatograph): PU-2085Plus system (available from JASCO Corporation)

Column: Chromolith® coated with SUMICHIRAL OA-5000 (inner diameter: 4.6 mm, length: 250 mm)(available from Sumika Chemical Analysis Service, Ltd.)

Column temperature: 25°C

Mobile phase: a mixed liquid of a 2 mM $CuSO_4$ aqueous solution and 2-propanol ($CuSO_4$ aqueous solution:2-propanol (volume ratio) = 95:5)

Mobile phase flow rate: 1.0 mL/min

Detector: UV 254 nm

Injecting amount: 20 μL

In the case where the above-described liquid chromatography is performed on the foam sheet, and the larger area between an area of a peak derived from the D-lactic acid and an area of a peak derived from the L-lactic acid is 98% or greater, an amount of the D-lactic acid or the L-lactic acid that is a constituent monomer unit of the polylactic acid resin included in the foam sheet is determined to be 98 mol% or greater in the polylactic acid resin.

Based on the obtained chart, a ratio of an area of the peak derived from D-lactic acid or L-lactic acid, whichever is larger, is calculated and determined as Area Ratio 1 relative to a total area of the peaks derived from the D-lactic acid and the L-lactic acid. The ratio of the optical isomer, the D-lactic acid or the L-lactic acid, whichever is smaller in the amount, can be also determined by the following equation (3).

```
(Ratio of optical isomer D-lactic acid or L-lactic acid having
  smaller amount [mol%]) = 100 × (1-Area Ratio 1) [mol%]
                                              Equation (3)
```

-Weight average molecular weight-

The weight average molecular weight (Mw) of the polylactic acid resin is 180,000 or greater and 320,000 or less, preferably 200,000 or greater and 310,000 or less, and more preferably 210,000 or greater and 310,000 or less. When the weight average molecular weight (Mw) of the polylactic acid resin is less than 180,000, an amount of a chain extender used to achieve a suitable range of a viscosity of the polylactic acid resin composition for foaming increases, or it may be difficult to adjust the viscosity of the polylactic acid resin composition to suit foaming. Since the chain extender is typically a petroleum-derived compound and is non-biodegradable, an amount of the chain extender used is preferably as small as possible in view of reduction in possible impacts on the environment. When the weight average molecular weight (Mw) of the polylactic acid resin is greater than 320,000, a viscosity of the polylactic acid resin composition tends to sharply change according to an amount of the chain extender used. Therefore, controllability of the viscosity of the polylactic acid resin composition is reduced so that it may be difficult to stably produce the foam sheet. When the weight average molecular weight (Mw) of the polylactic acid resin is 180,000 or greater and 320,000 or less, a viscosity of the polylactic acid resin composition can be adjusted to the suitable range for foaming to minimize fusion or breakage of air bubbles during production of the foam sheet, so that a foam sheet having a desired expansion ratio and surface properties can be stably obtained.

The weight average molecular weight (Mw) of the polylactic acid resin can be adjusted, for example, with an amount of an initiator used for polymerization of the polylactic acid resin, or reactivity. As the amount of the initiator is small, the weight average molecular weight of the polylactic acid resin is likely to be large. As the reactivity is increased (i.e., extending a reaction time, or increasing an amount of a catalyst), the weight average molecular weight of the polylactic acid resin is likely to be large. In the case where polylactic acid is obtained through ring-opening polymerization of lactide, a weight average molecular weight of the obtained polylactic acid resin varies depending on an acid value of the lactide or a moisture content. For example, a weight average molecular weight of a resulting polylactic acid resin is likely to be small when an acid value of a lactide used is high, and a weight average molecular weight of a resulting polylactic acid resin is likely to be small when a moisture content is large.

The weight average molecular weight (Mw) of the polylactic acid resin can be measured by gel permeation chromatography (GPC). The weight average molecular weight (Mw) of the polylactic acid resin is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight:

397,000), F-80 (weight average molecular weight: 707,000), and F-128 (weight average molecular weight: 1,110,000), all available from Tosoh Corporation) as the standards.

A sample provided for the GPC is prepared in the following manner. The polylactic acid resin and chloroform are mixed so that a concentration of the polylactic acid resin is approximately 2 mg/mL. The resulting mixture is shaken by a table top shaker (for example, MSI-60 available from AS ONE Corporation) for about half a day. After confirming that the polylactic acid resin is dissolved, the resulting solution is filtered with a 0.45 μm-membrane filter to collect a filtrate. The collected filtrate is used as a sample. In the case the polylactic acid resin is not easily dissolved, the mixture of the polylactic acid resin and chloroform is heated at a temperature equal to or lower than the boiling point of chloroform to dissolve the polylactic acid resin. The sample prepared in the above-described manner is measured by the same measuring device under the same measuring conditions as in the measurement of the weight average molecular weight (Mw) of the foam sheet.

-Acid value-

An acid value of the polylactic acid resin in the polylactic acid resin composition is not particularly limited, and may be appropriately selected according to the intended purpose. The acid value of the polylactic acid resin is preferably 5 mgKOH/g or less. When the acid value of the polylactic acid resin is 5 mgKOH/g or less, a viscosity of the polylactic acid resin composition is easily adjusted to suit foaming, and decomposition of the polylactic acid resin may be minimized during storage.

The acid value of the polylactic acid resin can be adjusted by performing vacuum refining after polymerization of the polylactic acid resin, or adjusting an amount of a compound reactive with an active hydrogen group that is optionally added after polymerization of the polylactic acid resin, or sufficiently drying during storage of the polylactic acid resin to minimize hydrolysis of the polylactic acid, or adjusting an acid value of lactide to low when polylactic acid is obtained through ring-opening polymerization of the lactide.

A method for measuring the acid value of the polylactic acid resin is not particularly limited. For example, the acid value of the polylactic acid resin can be determined by titration.

Specifically, approximately 1 g to approximately 3 g of the polylactic acid resin is collected in an Erlenmeyer flask, followed by adding 40 mL of dichloromethane. The resulting mixture is shaken at room temperature for about half a day to prepare a dichloromethane solution of the polylactic acid resin. The obtained solution is provided for measurement. When a viscosity of the dichloromethane solution is high, the viscosity of the dichloromethane solution is adjusted by reducing an amount of the polylactic acid resin or increasing an amount of the dichloromethane. To the dichloromethane solution serving as a sample, phenolphthalein is added as an indicator. The sample and a blank are each titrated using a 0.01 N potassium hydroxide ethanol solution, and an acid value of the sample is calculated according to the following equation (4).

```
Acid value [mgKOH/g] = (titration amount [mL] - blank [mL]) ×
factor × 0.01 [N] × 56.1 [g/mol]/(mass of sample [g])
                                                  Equation (4)
```

-Moisture content-

A moisture content of the polylactic acid resin is preferably reduced to 500 ppm or less prior to production of the polylactic acid resin composition or the foam sheet. When the moisture of the polylactic acid resin is 500 ppm or less, the polylactic acid resin composition is likely to be adjusted to have the viscosity suitable for foaming.

A method for measuring the moisture content of the polylactic acid resin is not particularly limited, and any methods available in the related art may be used. Examples of the method include Karl Fischer titration.

A method for drying the polylactic acid resin is not particularly limited, and any methods available in the related art may be used. Examples of the method include a method using a hot air dryer or a vacuum dryer.

A temperature for the drying is not particularly limited, and is preferably from 60°C to 80°C.

-Amount-

The amount of the polylactic acid resin in the polylactic acid resin composition is 98% by mass or greater, preferably 99% by mass or greater, relative to a total amount of organic matter of the polylactic acid resin composition. When the amount of the polylactic acid resin in the polylactic acid resin composition is 98% by mass or greater relative to a total amount of organic matter of the polylactic acid resin composition, a foam sheet that gives low impact on the environment, and has high recyclability (easiness in recycling) and desired biodegradability is obtained. The amount of the polylactic acid resin relative to a total amount of organic matter of the polylactic acid resin composition is the same as an amount of the polylactic acid resin relative to a total amount of organic matter of the foam sheet, because the foam sheet is obtained by foaming the polylactic acid resin composition.

The organic matter in the polylactic acid resin composition is mainly the polylactic acid resin. Examples of the organic matter other than the polylactic acid resin include organic nucleating agents serving as the below-described foam nucleating agent, and chain extenders. When an inorganic nucleating agent is used as the foam nucleating agent of the foam sheet, the inorganic nucleating agent is not regarded as the organic matter.

The amount of the polylactic acid resin relative to a total amount of the organic matter of the polylactic acid resin composition can be determined by calculating the total amount of the organic matter from a blending ratio (composition ratio) of constituent components used when the polylactic acid resin composition is prepared. When the blending ratio is not known, the total amount of the organic matter of the polylactic acid resin composition may be determined by nuclear magnetic resonance spectroscopy (NMR) in the following manner.

As a solvent used for the nuclear magnetic resonance spectroscopy, a solvent used is prepared by weighing approximately 100 mg of a 1,3,5-trimethoxybenzene standard (for quantitative NMR, available from FUJIFILM Wako Pure Chemical Corporation) as an internal standard substance, and dissolving the collected standard substance in deuterated chloroform (including 0.3% by volume of tetramethylsilane (TMS)) in a 10 mL volumetric flask.

A sample provided for the nuclear magnetic resonance spectroscopy is prepared in the following manner. The above-prepared solvent is added to the polylactic acid resin composition or the foam sheet so that a concentration of the polylactic acid resin composition or the foam sheet is 10 mg/mL. The resulting mixture is shaken by a table top shaker (MSI-60, available from AS ONE Corporation) for about half a day to dissolve the polylactic acid resin composition or the foam sheet. In order to minimize a change in the concentration of the sample due to evaporation of the solvent as much as possible, the smallest container available is selected for use in the shaking. The sample prepared in the above-described manner is placed in a sample tube having a diameter of 5 mm, which is provide for NMR.

NMR of $^1$H ($^1$H-NMR) is performed on the above-prepared sample according to JIS K 0138:2018 (General rules for quantitative nuclear magnetic resonance spectroscopy (qNMR)) using the same measuring device and the same measuring conditions to the measuring device and measuring conditions used in the measurement of the terminal OH content.

Based on the obtained data, integration of the following chemical shift peaks is carried out to calculate an integration ratio according to the following equation (5). Integration 1 (derived from polylactic acid resin): 5.2 ppm Integration 2 (derived from internal standard): 6.1 ppm

$$\text{Integration ratio} = \text{Integration 1}/(\text{Integration 2} \times \text{sample mass})$$

$$\text{Equation (5)}$$

NMR is performed on a polylactic acid resin whose purity is known using the same solvent used for the above-mentioned sample in the same manner as in the above-described NMR. A ratio of the integration ratio of the polylactic acid resin whose purity had been known according to the equation (5) and the integration ratio of the sample is determined to calculate an amount of the polylactic acid resin relative to a total amount of organic matter in the foam sheet according to the following equation (6). The series of processes from the preparation of the sample to the analysis is performed three times, and the arithmetic mean of the obtained amounts of the polylactic acid resin is determined as an amount of the polylactic acid resin relative to a total amount of organic matter in the foam sheet.

$$\text{Amount of polylactic acid resin [\% by mass]} = 100 \times \text{purity [\% by mass] of polylactic acid resin whose purity is known} \times (\text{integration ratio of sample})/(\text{integration ratio of polylactic acid resin whose purity is known})$$

$$\text{Equation (6)}$$

-Terminal hydroxyl group content-

The terminal hydroxyl group content (terminal OH content) of the polylactic acid resin is 0.3 or greater and 1.4 or less, more preferably 0.9 or greater and 1.3 or less. When the terminal hydroxyl group content of the polylactic acid resin is less than 0.3, it may be difficult to adjust the viscosity of the polylactic acid resin composition to suit foaming.

When the terminal hydroxyl group content of the polylactic acid resin is greater than 1.4, an amount of a chain extender used to achieve a suitable range of a viscosity of the polylactic acid resin composition for foaming may increase. When the terminal OH content of the polylactic acid resin is 0.3 or greater and 1.4 or less, a viscosity of the polylactic acid resin composition can be adjusted to the suitable range for foaming to minimize fusion of air bubbles and breakage of air bubbles during production of the foam sheet, so that a foam sheet having a desired expansion ratio and surface properties can be stably obtained.

For example, the terminal hydroxyl group content of the polylactic acid resin can be adjusted by adjusting an amount of an initiator used for polymerization of the polylactic acid resin, or adjusting a type and the number of functional groups included in the initiator, or adjusting an amount of a compound reactive with an active hydrogen group, which is optionally added after polymerization of the polylactic acid resin, or adding a nucleophile, such as water and alcohol, to the polylactic acid resin to intentionally decompose the polylactic acid resin, or melt-kneading the polylactic acid resin to decompose the polylactic acid resin with heat or shear, or mixing several polylactic acid resins having mutually different terminal hydroxyl group contents. Specifically, the terminal hydroxyl group content of the polylactic acid resin can be increased by increasing an amount of an initiator used for polymerization of the polylactic acid resin; the terminal hydroxyl group content of the polylactic acid resin can be increased by increasing the number of functional groups included in an initiator; and the terminal hydroxyl group content of the polylactic acid resin can be reduced by increasing an amount of a compound reactive with an active hydrogen group.

In the present disclosure, the terminal hydroxyl group content of the polylactic acid resin is a value measured by nuclear magnetic resonance spectroscopy (NMR) in the following manner.

As a reference substance for a chemical shift, deuterochloroform including tetramethylsilane (TMS) (for example, 0.05 vol% TMS-containing deuterochloroform for NMR, available from FUJIFILM Wako Pure Chemical Corporation) is passed through a column filled with potassium carbonate just before mixing the TMS-containing deuterochloroform with the polylactic acid resin. The column filled with the potassium carbonate is prepared, for example, by filling an edge of a Pasteur pipette with cotton wool, followed by filling up to approximately 5 cm with potassium carbonate granules. The fraction of the fluid (approximately 2 mL to approximately 3 mL) initially passed through the column is not used for the preparation of a sample.

A sample for NMR may be prepared in the following manner. The polylactic acid resin is mixed with the TMS-containing deuterochloroform so that a concentration of the polylactic acid resin is 10 mg/mL. The resulting mixture is shaken by a table top shaker (for example, MSI-60, available from AS ONE Corporation) for about half a day, while retaining the temperature at 30°C, to completely dissolve the polylactic acid resin. The resulting solution was filtered with a 0.45 $\mu$m-membrane filter to collect a filtrate. The collected filtrate is sealed in an NMR sample tube having a diameter of 5 mm, and the sample is provided for nuclear magnetic resonance spectroscopy (NMR) that is performed by the following measuring device under the following measuring conditions.

Measuring conditions and a measuring device used for NMR are not particularly limited. $^1$H nuclear magnetic resonance spectroscopy ($^1$H-NMR) may be performed on the above-prepared sample by the following measuring device under the following measuring conditions according to JIS K 0138:2018 (General rules for quantitative nuclear magnetic resonance spectroscopy (qNMR)).

[[Measuring device and measuring conditions]]

Nuclear magnetic resonance (NMR) spectrometer: JNM-ECX-500 FT-NMR (available from JEOL Ltd.)
Observed nuclei: $^1$H
Measuring temperature: 30°C
Spin: off
Digital resolution: 0.25 Hz
Observation range: -0.5 ppm to 15 ppm
Pulse angle: 90 degrees
Relaxation time: 60 seconds
Number of scans: 16 times (dummy scanning is performed twice before the actual measurement)
13C decoupling: performed

The FID data obtained by the measurement above is converted into a spectrum by Fourier transform without using a window function, and Integrations 3 and 4 of the following chemical shift peaks are performed to calculate a terminal OH content according to the following equation (7).

The integrations may be carried out using the function included in commercially available analysis software. At the time of the analysis, the chemical shifts may be corrected so that the chemical shift of the TMS added as the internal reference becomes 0 ppm. Optionally, base line corrections and smoothing may be carried out. When signals are weak relative to the noise, the number of scans may be increased, or a NMR spectrometer having the higher resonance frequency may be used to easily perform the analysis.

Integration 3: 5.08 ppm to 5.28 ppm
Integration 4: 4.30 ppm to 4.40 ppm

$$\text{Terminal OH content} = 1{,}000 \times (\text{Integration 4})/(\text{Integration 3})$$

$$\text{Equation (7)}$$

However, unnecessary peaks may be overlapped in the range of Integration 2 depending on additives or impurities included in the polylactic acid resin, which may make analysis difficult. In such a case, the terminal OH content may be determined according to the following alternative method.

The alternative method is performed as follows. One drop of trifluoroacetic acid anhydride is added to the NMR sample tube charged with the sample for NMR prepared in the above-described manner, and the resulting mixture is shaken to homogeneously mix, followed by leaving to stand for 30 minutes at room temperature (25°C $\pm$ 5°C). The resulting mixture is again shaken to homogeneously mix to prepare an alternative sample. $^1$H nuclear magnetic resonance spectroscopy ($^1$H-NMR) is performed on the prepared sample by the above-mentioned measuring device under the above-mentioned measuring conditions. The FID data obtained by the measurement above is converted into a spectrum by Fourier transform without using a window function, and Integrations 3 and 5 of the following chemical shift peaks are performed to calculate a terminal OH content according to the following equation (8).

Integration 3: 5.08 ppm to 5.28 ppm
Integration 5: 5.28 ppm to 5.36 ppm

$$\text{Terminal OH content} = 1{,}000 \times (\text{Integration 5})/(\text{Integration 3})$$

$$\text{Equation (8)}$$

-Melting point-

A melting point of the polylactic acid resin can be determined by differential scanning calorimetry (DSC) according to JIS K 7121:2012 (Testing method for transition temperatures of plastics).

Specifically, a DSC measurement for the melting point of the polylactic acid resin is performed, for example, by a differential scanning calorimeter (for example, Q-2000, available from TA Instruments Japan Inc.). A sample of the polylactic acid resin (from 5 mg to 10 mg) is placed in a container of the differential scanning calorimeter, and the sample is heated to 200°C at a heating rate of 10 °C/min to measure the melting point.

A peak top temperature (peak melting temperature [Tpm]) of an endothermic peak, which is observed at the higher temperature side relative to the glass transition temperature and is derived from melting of crystals, is determined as a melting point. In a case where two or more endothermic peaks are observed at the higher temperature side relative to the glass transition temperature, a peak top temperature of the peak having the largest area is determined as a melting point of the polylactic acid resin. The melting point of the polylactic acid resin is in the range of approximately 150°C to approximately 190°C.

The melting point of the polylactic acid resin can be adjusted mainly with optical purity of the polylactic acid resin. As the optical purity is increased, the melting point of the polylactic acid resin tends to be high.

-Glass transition temperature-

A glass transition temperature of the polylactic acid resin can be determined by differential scanning calorimetry (DSC) according to JIS K 7121:2012 (Testing method for transition temperatures of plastics).

Specifically, a DSC measurement for the glass transition temperature of the polylactic acid resin is performed, for example, by a differential scanning calorimeter (for example, Q-2000, available from TA Instruments Japan Inc.). A sample (from 5 mg to 10 mg) of the polylactic acid resin is placed in a container of the differential scanning calorimeter, and the sample is heated from 10°C to 200°C at a heating rate of 10 °C/min to measure the glass transition temperature.

In the present specification, the term "glass transition temperature" encompasses an extrapolated onset temperature (an initiation glass transition temperature (Tig)) described in JIS K 7121:2012. The glass transition temperature of the polylactic acid resin is in the range of approximately 55°C to approximately 70°C.

-Melt viscosity-

A melt viscosity of the polylactic acid resin is not particularly limited, and may be appropriately selected according to the intended purpose. The melt viscosity of the polylactic acid resin is preferably 500 Pa·s or greater and 1,500 Pa·s or less. When the melt viscosity of the polylactic acid resin is 500 Pa·s or greater and 1,500 Pa·s or less, the viscosity of the polylactic acid resin composition is easily adjusted to the viscosity suitable for foaming so a load applied to a foaming device is reduced to increase productivity, and a foam sheet having a low bulk density and having excellent surface properties can be obtained.

The melt viscosity of the polylactic acid resin can be measured, for example, by weighing 1.5 g of the polylactic acid resin, drying the collected polylactic acid resin in a dryer of 80°C for two hours to prepare a sample, and measuring the sample by a flow tester under the following measuring conditions.

[[Measuring device and measuring conditions]]

Device: CFT-100EX (available from Shimadzu Corporation)
Test conditions:

Constant temperature method
Test temperature: 190°C
Test force: 40 kgf
Heat remaining time: 180 seconds
Diameter of die orifice: 1 mm
Length of die: 1 mm

Analysis: the installed software, CFT-EX, is used, and a melt viscosity is calculated with the following calculation parameters.
Calculation parameters:

Limiting method
Calculation start point: 3.0 mm
Calculation end point: 7.0 mm
Sample density: 1 g/cm$^3$

-Ratio between melt viscosity of foam sheet and melt viscosity of polylactic acid resin-

A ratio of the melt viscosity of the foam sheet to the melt viscosity of the polylactic acid resin is not particularly limited, and may be appropriately selected according to the intended purpose. The ratio of the melt viscosity of the foam sheet to the melt viscosity of the polylactic acid resin is preferably 7 or greater and 80 or less. When the ratio of the melt viscosity of the foam sheet to the melt viscosity of the polylactic acid resin is 7 or greater and 80 or less, a load applied to a foaming device is reduced to improve productivity, and a foam sheet having a low bulk density, and excellent thermal insulation properties, strength, and surface properties is obtained with low crystallinity.

The ratio of the melt viscosity of the foam sheet to the melt viscosity of the polylactic acid resin can be determined by the following equation (9).

```
Ratio of melt viscosity of foam sheet to melt viscosity of polylactic acid
resin = melt viscosity of foam sheet/melt viscosity of polylactic acid resin
                                                      Equation (9)
```

<Epoxy group-containing compound including two or more epoxy groups per molecule>

The epoxy group-containing compound including two or more epoxy groups per molecule is added to the polylactic acid resin composition as a chain extender (may be also referred to as a "crosslinking agent"). The epoxy group-containing compound including two or more epoxy groups per molecule can impart a branched-chain structure to the polylactic acid resin to efficiently improve a viscosity of the polylactic acid resin composition so that the viscosity of the polylactic acid resin composition can be adjusted to a range suitable for foaming. Moreover, an amount of free and unreacted molecules of the epoxy group-containing compound including two or more epoxy groups per molecule can be reduced. The epoxy group-containing compound including two or more epoxy groups per molecule also has a function of improving thermal resistance or hydrolysis resistance of the polylactic acid resin composition and foam sheet.

The epoxy group-containing compound including two or more epoxy groups per molecule is not particularly limited, and may be appropriately selected according to the intended purpose. The epoxy group-containing compound including two or more epoxy groups per molecule is preferably a compound obtained by copolymerizing at least an epoxy group-containing (meth)acryl monomer.

The epoxy group-containing (meth)acryl monomer is not particularly limited, and may be appropriately selected according to the intended purpose. Examples of the epoxy group-containing (meth)acryl monomer include 1,2-epoxy group-containing monomers, such as glycidyl acrylate, and glycidyl methacrylate. The above-listed examples may be used alone or in combination.

The epoxy group-containing compound including two or more epoxy groups per molecule may further include, as well as the epoxy group-containing (meth)acryl monomer, a (meth)acryl monomer that does not include an epoxy group, and a double bond group-containing monomer as a copolymerizable component.

The (meth)acrylic monomer that does not include an epoxy group is not particularly limited, and may be appropriately selected according to the intended purpose. Examples of the (meth)acrylic monomer that does not include an epoxy group include methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate. The above-listed examples may be used alone or in combination.

The double bond group-containing monomer is not particularly limited, and may be appropriately selected according to the intended purpose. Examples of the double bond group-containing monomer include styrene monomers, α-methyl styrene monomers, and vinyl acetate monomers. The above-listed examples may be used alone or in combination. Examples of the styrene monomers include styrene and α-methyl styrene.

The above-listed epoxy group-containing compounds each including two or more epoxy groups per molecule may be used alone or in combination. Among the above-listed examples, the epoxy group-containing compound including two or more epoxy groups per molecule is particularly preferably an epoxy functional (meth)acryl-styrene-based chain extender including two or more epoxy groups per molecule, which is obtained by copolymerizing the epoxy group-containing (meth)acrylic monomer and the styrene monomer in view of reactivity, processability, and safety.

The epoxy functional (meth)acryl-styrene-based chain extender that includes two or more epoxy groups per molecule is a compound obtained by copolymerizing at least the epoxy group-containing (meth)acryl monomer and a styrene monomer.

The epoxy group-containing compound may be suitably synthesized for use or appropriately selected from commercial products. Examples of product names of the commercial products of the epoxy group-containing compound include MARPROOF™ G-01100 (available from NOF CORPORATION), MARPROOF™ G-0105SA (available from NOF CORPORATION), MARPROOF™ G-2050M (available from NOF CORPORATION), MARPROOF™ G-0130SP (available from NOF CORPORATION), MARPROOF™ G-0130SF (available from NOF CORPORATION), MARPROOF™ G-0250SP (available from NOF CORPORATION), MARPROOF™ G-0250SF (available from NOF CORPORATION), METABLEN™ P1901 (available from Mitsui Chemicals, Inc.), Joncryl® ADR4368 (available from BASF SE), Joncryl® ADR4370 (available from BASF SE), Joncryl® ADR4468 (available from BASF SE), IGETABOND™ BF-2C (available from SUMITOMO CHEMICAL COMPANY, LIMITED), IGETABOND™ BF-E (available from SUMITOMO CHEMICAL COMPANY, LIMITED), IGETABOND™ BF-2B (available from SUMITOMO CHEMICAL COMPANY, LIMITED), IGETABOND™ BF-7B (available from SUMITOMO CHEMICAL COMPANY, LIMITED), IGETABOND™ BF-7M (available from SUMITOMO CHEMICAL COMPANY, LIMITED), CESA-Extend OMAN698493 (available from Clariant), and ARUFON UG-4040 (available from TOAGOSEI CO., LTD.). Among the above-listed examples, in view of thermal insulation properties, biodegradability, and minimization of molding failures, MARPROOF™ G-0250SP (available from NOF CORPORATION), MARPROOF™ G-0250SF (available from NOF CORPORATION), and Joncryl® ADR4468 (available from BASF SE) are preferably used as the commercial products of the epoxy group-containing compound because a high expansion ratio can be achieved with a low concentration of the epoxy group-containing compound under the production conditions of a foam sheet that are unlikely to cause corrugation.

An amount of the epoxy group-containing compound including two or more epoxy groups per molecule in the polylactic acid resin composition may be appropriately selected, and may vary according to a molecular weight or terminal OH amount of a polylactic acid resin used. For example, an amount of the epoxy group-containing compound including two or more epoxy groups per molecule used to adjust a viscosity of the polylactic acid resin composition to suit foaming may increase when a weight average molecular weight of the polylactic acid resin is small or a terminal OH content of the polylactic acid resin is large. As an amount of the epoxy group-containing compound including two or more epoxy groups per molecule increases, however, biodegradability is likely to decrease. A large amount of the epoxy group-containing compound including two or more epoxy groups per molecule is not preferred in view of sustainability, because the epoxy group-containing compound including two or more epoxy groups per molecule is typically a petroleum-derived compound.

Therefore, an amount of the epoxy group-containing compound including two or more epoxy groups per molecule in the polylactic acid resin composition is preferably 0.2% by mass or greater and 1.0% by mass or less, more preferably 0.4% by mass or greater and 1.0% by mass or less, and yet more preferably 0.4% by mass or greater and 0.9% by mass or less, relative to a total amount of organic matter of the polylactic acid resin composition. When the amount of the epoxy group-containing compound including two or more epoxy groups per molecule is 0.2% by mass or greater and 1.0% by mass or less relative to a total amount of organic matter of the polylactic acid resin composition, as the polylactic acid resin having the characteristics disclosed in the present specification is used, a viscosity of the polylactic acid resin composition can be adjusted to a range suitable for foaming without impairing biodegradability of the polylactic acid resin.

The epoxy equivalent of the epoxy group-containing compound including two or more epoxy groups per molecule is 170 or greater and 350 or less, preferably 170 or greater and 310 or less. The epoxy group-containing compound including two or more epoxy groups per molecule is preferably a compound obtained by copolymerizing at least an epoxy group-containing (meth)acrylic monomer, but it is difficult to obtain the epoxy group-containing compound, in which two or more epoxy groups are included per molecule, having an epoxy equivalent of less than 170. When the epoxy equivalent of the epoxy group-containing compound including two or more epoxy groups per molecule is greater than 350, a viscosity of the polylactic acid resin composition may not be adjusted to a range suitable for foaming, or a large amount of the chain extender may be used to adjust the viscosity of the polylactic acid resin composition to the suitable range. When the epoxy equivalent of the epoxy group-containing compound including two or more epoxy groups per molecule is 170 or greater and 350 or less, the epoxy group-containing compound having the above-mentioned epoxy equivalent is readily commercially available, and a viscosity of the polylactic acid resin composition can be adjusted to a range suitable for foaming with a small amount of the chain extender.

The epoxy equivalent of the epoxy group-containing compound including two or more epoxy groups per molecule affects a distance between crosslinks in a reaction product obtained by reacting the polylactic acid resin with the epoxy group-containing compound. In a case where an amount (mass) of the epoxy group-containing compound including two or more epoxy groups per molecule used and an amount (mass) of the polylactic acid resin used are the same, as the epoxy equivalent of the epoxy group-containing compound including two or more epoxy groups per molecule is smaller, the number of epoxy groups per molecule of the epoxy group-containing compound including two or more epoxy groups per molecule increases to reduce the distance between crosslinks in the reaction product of polylactic acid resin and the epoxy group-containing compound including two or more epoxy groups per molecule; as the epoxy equivalent of the epoxy group-containing compound including two or more epoxy groups per molecule increases, the number of epoxy groups per molecule of the epoxy group-containing compound including two or more epoxy groups per molecule decreases to increase the distance between crosslinks in the reaction product of the polylactic acid resin and the epoxy group-containing compound including two or more epoxy groups per molecule. When the distance between the crosslinks in the reaction product of the polylactic acid resin and the epoxy group-containing compound including two or more epoxy groups per molecule is very short, many crosslink structures may be formed in parts of the reaction product of the polylactic acid resin and the epoxy group-containing compound including two or more epoxy groups per molecule so that melt viscosity of the polylactic acid resin composition may become uneven and an expansion ratio is not increased. When the distance between the crosslinks in the reaction product of the polylactic acid resin and the epoxy group-containing compound including two or more epoxy groups per molecule is very long, an effect of improving melt viscosity of the polylactic acid resin composition is minimized so that an expansion ratio is similarly not increased. By setting the epoxy equivalent of the epoxy group-containing compound including two or more epoxy groups per molecule to the range of 170 or greater and 350 or less, a viscosity of the polylactic acid resin composition is efficiently adjusted to a range suitable for foaming with a small amount of the chain extender (crosslinking agent).

In the present specification, the epoxy equivalent of the epoxy group-containing compound including two or more epoxy groups per molecule is a value measured according to JIS K 7236:2001 (Determination of epoxy equivalent in epoxy resins), and can be measured by titration in the following manner.

To the epoxy group-containing compound including two or more epoxy groups per molecule (from 0.1 g to 0.3 g), 10 mL of chloroform is added. The resulting mixture is stirred with a magnetic stirrer etc., to completely dissolve the epoxy group-containing compound. To the resulting solution, 20 mL of acetic acid and 10 mL of a chloroform solution of tetraethylammonium bromide (concentration: 0.25 g/mL) are added to prepare a sample. Titration of the sample is carried out with a 0.1 mol/L perchloric acid-acetic acid reference liquid by the following measuring device under the following measuring conditions.

[[Measuring device and measuring conditions]]

Device: automatic titrator COM-A-19 (available from HIRANUMA Co., Ltd.)
Reference liquid: 0.1 mol/L perchloric acid-acetic acid reference liquid
Electrode: glass electrode GTRS10B
reference electrode GTPH1B (inner liquid: saturated sodium perchlorate/acetic acid solution)
Measuring mode: inflection point detection
Derivative value: 100 mV/mL

Based on the value obtained by the measurement above, an epoxy equivalent is calculated according to the following equation (10).

$$\text{Epoxy equivalent} = 1{,}000 \times S / \{(A1-BL) \times M \times f\} \qquad \text{Equation (10)}$$

In the equation (10), S is a mass (g) of the sample, A1 is the titration amount (mL) at the inflection point, BL is a result (mL) of a blank test, M is a concentration (mol/L) of the reference liquid, and f is a factor of the reference liquid. The blank test is performed twice, and the arithmetic mean of the measured values is used as the result of the blank test.

A weight average molecular weight (Mw) of the epoxy group-containing compound including two or more epoxy groups per molecule is not particularly limited, and may be appropriately selected according to the intended purpose. The weight average molecular weight (Mw) of the epoxy group-containing compound including two or more epoxy groups per molecule is preferably 6,000 or greater and 30,000 or less. When the weight average molecular weight (Mw) of the epoxy group-containing compound including two or more epoxy groups per molecule is 6,000 or greater, a melt viscosity of the polylactic acid resin composition may be effectively improved by reacting with the polylactic acid resin. When the weight average molecular weight (Mw) of the epoxy group-containing compound including two or more epoxy groups per molecule is 30,000 or less, reactivity of the epoxy group-containing compound including two or more epoxy groups per molecule with the polylactic acid resin increases so that a melt viscosity of the polylactic acid resin composition may be effectively improved.

The weight average molecular weight (Mw) of the epoxy group-containing compound including two or more epoxy groups per molecule affects the number of crosslink points in the reaction product of the polylactic acid resin and the epoxy group-containing compound including two or more epoxy groups per molecule. Although it also depends on the number of epoxy groups per molecule of the epoxy group-containing compound, in the case where the number of epoxy groups per molecule of the epoxy group-containing compound is the same and an amount (mass) of the epoxy group-containing compound including two or more epoxy groups per molecule added and an amount (mass) of the polylactic acid resin added are the same, the number of crosslink points in the reaction product of the polylactic acid resin and the epoxy group-containing compound including two or more epoxy groups per molecule is smaller, as the weight average molecular weight (Mw) of the epoxy group-containing compound including two or more epoxy groups per molecule is smaller, and the number of crosslink points in the reaction product of the polylactic acid resin and the epoxy group-containing compound including two or more epoxy groups per molecule is larger, as the weight average molecular weight (Mw) of the epoxy group-containing compound including two or more epoxy groups per molecule is larger. As the number of crosslink points in the reaction product of the polylactic acid resin and the epoxy group-containing compound including two or more epoxy groups per molecule is larger, molecular chains of the reaction product of the polylactic acid resin and the epoxy group-containing compound including two or more epoxy groups per molecule are more likely to tangle with one another to increase a melt viscosity of the polylactic acid resin composition at the time of melt foaming so that an expansion ratio is increased, leading to improvement in thermal insulation properties. When the weight average molecular weight (Mw) of the epoxy group-containing compound including two or more epoxy groups per molecule is very large, however, flowability of the polylactic acid resin composition is lost at a temperature below a reaction temperature of the epoxy group-containing compound including two or more epoxy groups per molecule to reduce reactivity between the polylactic acid resin and the epoxy group-containing compound including two or more epoxy groups per molecule. As a result, a melt viscosity of the polylactic acid resin composition is not increased and an expansion ratio is also not increased. For the above-described reasons, the weight average molecular weight of the epoxy group-containing compound including two or more epoxy groups per molecule is set to the range of 10,000 or greater and 20,000 or less so that a melt viscosity of the polylactic acid resin composition is increased, and an expansion ratio is increased to improve thermal insulation properties of a resulting foam sheet.

As the number of crosslink points in a reaction product between the polylactic acid resin and the epoxy group-containing compound including two or more epoxy groups per molecule increases, the reaction product includes a large number of branched-chain structures so that a melt viscosity of the polylactic acid resin composition increases and a bulk density of a resulting foam sheet may decrease. When the weight average molecular weight (Mw) of the epoxy group-containing compound including two or more epoxy groups per molecule is very large, however, compatibility with the polylactic acid decreases to lower reactivity so that a melt viscosity of the polylactic acid resin composition is not increased and an expansion ratio is not increased. When the weight average molecular weight (Mw) of the epoxy group-containing compound including two or more epoxy groups per molecule is 6,000 or greater and 30,000 or less, a melt viscosity of the polylactic acid resin composition is increased so that an expansion ratio is increased to improve thermal insulation properties.

The weight average molecular weight (Mw) of the epoxy group-containing compound including two or more epoxy groups per molecule can be measured by GPC. The weight average molecular weight (Mw) of the epoxy group-containing compound including two or more epoxy groups per molecule is calculated using calibration curves prepared by polystyrene samples whose weight average molecular weights are known (for example, A-500 (weight average molecular weight: 589), A-1000 (weight average molecular weight: 1,010), A-2500 (weight average molecular weight: 312), A-5000 (weight average molecular weight: 5,430), F-1 (weight average molecular weight: 9,490), F-2 (weight average molecular weight: 15,700), F-4 (weight average molecular weight: 37,200), F-10 (weight average molecular weight: 98,900), F-20 (weight average molecular weight: 189,000), F-40 (weight average molecular weight: 397,000), F-80 (weight average molecular weight: 707,000), and F-128 (weight average molecular weight: 1,110,000), available from Tosoh Corporation) as the standards.

A sample provided for the GPC is prepared in the following manner. The epoxy group-containing compound including two or more epoxy groups per molecule and chloroform are mixed so that a concentration of the epoxy group-containing compound including two or more epoxy groups per molecule is approximately 2 mg/mL. The resulting mixture is shaken by a table top shaker (for example, MSI-60 available from AS ONE Corporation) for about half a day. After confirming that the epoxy group-containing compound including two or more epoxy groups per molecule is dissolved, the resulting solution is filtered with a 0.45 $\mu$m-membrane filter to collect a filtrate, and the collected filtrate is used as a sample. In the case where the epoxy group-containing compound including two or more epoxy groups per molecule is not easily dissolved, the mixture of the epoxy group-containing compound including two or more epoxy groups per molecule and chloroform is heated at a temperature equal to or lower than the boiling point of chloroform to dissolve the epoxy group-containing compound including two or more epoxy groups per molecule. A measuring device and measuring conditions of the above-described GPC are not particularly limited. For example, the sample prepared in the above-described manner is measured by the same measuring device under the same measuring conditions as in the measurement of the weight average molecular weight (Mw) of the foam sheet.

<<Inorganic particles>>

The polylactic acid resin composition preferably further includes inorganic particles as a foam nucleating agent to adjust a pore diameter of the foam sheet, or as a foam regulator to improve an expansion ratio of a foam sheet, or a reinforcer to improve mechanical properties of the foam sheet, as a crystal nucleating agent to improve the crystallization speed, or to adjust appearance (color tone) of the foam sheet.

The inorganic particles are not particularly limited, and may be appropriately selected according to the intended purpose. Examples of the inorganic particles include talc, kaolin, calcium carbonate, sheet silicate, zinc carbonate, wollastonite, silica, alumina, magnesium oxide, calcium silicate, sodium aluminate, calcium aluminate, sodium aluminosilicate, magnesium silicate, glass balloons, carbon black, zinc oxide, antimony trioxide, zeolite, hydrotalcite, metal fibers, metal whiskers, ceramic whiskers, potassium titanate, boron nitride, graphite, glass fibers, and carbon fibers. The above-listed examples may be used alone or in combination.

Among the above-listed examples, the inorganic particles are preferably silica, talc, or sheet silicate, more preferably at least one selected from the group consisting of silica, talc, and mica, and yet more preferably sheet silicate or silica, because the above-listed inorganic particles easily achieve surface properties suitable for forming foam nuclei through a surface treatment.

-Silica-

The silica includes silicon dioxide represented by $SiO_2$ as a main component. The silica is roughly classified into silica produced by a wet process and silica produced by a dry process, according to a production method of silica particles. In the present disclosure, silica produced by either method may be used.

The silica is preferably subjected to a surface treatment with a reactive compound, such as a silane coupling agent and a titanate coupling agent, to impart hydrophobicity to adjust the surface properties suitable for forming foam nuclei.

The average hydrophobicity of the silica achieved by the surface treatment is not particularly limited, and may be appropriately selected according to the intended purpose. The average hydrophobicity of the silica is preferably 65% by volume or greater.

Moreover, a carbon content of the silica achieved by the surface treatment of the silica is not particularly limited,

and may be appropriately selected according to the intended purpose. The carbon content is preferably 4% by mass or greater.

When the average hydrophobicity of the silica is 65% by volume or greater and the carbon content of the silica is 4% by mass or greater, in the case where a non-polar blowing agent, such as carbon dioxide and nitrogen, is used, hydrophobic surfaces of the inorganic particles suitably function as an area for forming foaming nuclei to efficiently form foaming nuclei.

In the present disclosure, the hydrophobicity of the inorganic particles is a value determined by the methanol wettability (MW) test. The larger the value of the hydrophobicity is, the higher the hydrophobicity is. The smaller the value of the hydrophobicity is, the higher the hydrophilicity is.

Specifically, the hydrophobicity of the inorganic particles is measured as follows. The inorganic particles are added to V1 [mL] of pure water. While stirring the resulting mixture, methanol is added by dripping, and an amount of the methanol used to wet and disperse the inorganic particles is determined as V2 [mL]. The hydrophobicity of the inorganic particles is then calculated according to the following equation (11) .

$$\mathtt{Hydrophobicity\ [\%\ by\ volume]\ =\ \{V2/(V1+V2)\}\times100}$$

$$\mathtt{Equation\ (11)}$$

More specifically, the hydrophobicity of the inorganic particles is a value obtained by the following measuring method.

In a 50 mL screw tube (LABORUN screw tube bottle 9-852-09, No. 7, available from LABORUN TECH), 50 mg of the inorganic particles are weighed, followed by adding 5 mL (V1 [mL]) of pure water to prepare a sample. A container is charged with the prepared sample. To the container, a stir bar (diameter: 6 mm, length: 20 mm, oval shape) is gently added. The sample in the container is gently stirred by a magnetic stirrer (MX-1, available from SHIBATA SCIENTIFIC TECHNOLOGY LTD.) in a manner that a vortex is not generated in the fluid surface of the sample. The opening of the container is covered with PARAFILM in which a hole is made, and methanol (guaranteed reagent, >99.8%, available from KANTO CHEMICAL CO., INC.) is added at the feeding rate of 0.3 mL/min by a 25 mL burette (tolerance: ±0.03 mL, available from AS ONE Corporation) in a manner that the methanol travels along the wall surface of the container. An amount (V2 [mL]) of the methanol fed until the inorganic particles are completely dispersed within the sample fluid is measured. The measurement is performed three times and hydrophobicity is calculated according to the equation (11). The arithmetic mean of the calculated values of the hydrophobicity is calculated and determined as average hydrophobicity.

In the present disclosure, the carbon content of the inorganic particles is an amount of carbon (% by mass) included in the inorganic particles, and is a value determined by the following measuring method according to ISO3262-20.

After completely burning the weighed inorganic particles at 800°C, carbon dioxide in the generated combustion gas component is detected and quantified by thermal conductivity detector (TCD) gas chromatography to calculate the carbon content of the inorganic particles.

Examples of the surface treatment suitable for the above-described hydrophobic silica include a surface treatment with a reactive compound, such as ogano polysiloxane (silicone oil) and C16 or higher alkyl silane.

The hydrophobic silica may be appropriately synthesized, or may be selected from commercial products. Examples of the commercial products of the hydrophobic silica include AEROSIL® RY50 (available from NIPPON AEROSIL CO., LTD.), AEROSIL® RY200 (available from NIPPON AEROSIL CO., LTD.), AEROSIL® RY200S (available from NIPPON AEROSIL CO., LTD.), AEROSIL® RY300 (available from NIPPON AEROSIL CO., LTD.), and AEROSIL® VP NKC 130 (available from NIPPON AEROSIL CO., LTD.).

-Sheet silicate-

The sheet silicate is preferably added as a foam regulator because the sheet silicate has a high aspect ratio so that the grains of the sheet silicate are effectively aligned along walls of air bubbles (cells) to easily improve an expansion ratio. The sheet silicate is particularly preferably mica because mica easily achieves a high aspect ratio.

The polylactic acid resin composition preferably includes the below-described foam nucleating agent or the foam regulator, or a combination of the foam nucleating agent and the foam regulator.

A mean volume diameter (Mv) of the sheet silicate is not particularly limited, and may be appropriately selected according to the intended purpose. The mean volume diameter (Mv) of the sheet silicate is preferably 10 μm or greater and 200 μm or less. When the mean volume diameter (Mv) of the sheet silicate is 10 μm or greater, a diffusion path of a blowing agent becomes long so that the blowing agent is easily retained within air bubbles to improve an expansion ratio. When the mean volume diameter (Mv) of the sheet silicate is 200 μm or less, the sheet silicate does not break a cell wall so that breakage of air bubbles can be minimized and an expansion ratio can be improved.

The mean volume diameter (Mv) of the sheet silicate may be measured on sheet silicate before adding to prepare the polylactic acid resin composition, or may be measured on the sheet silicate collected from the foam sheet, for example, by the following method.

A sample is cut out from the foam sheet. The sample is placed in a crucible, and combustion of the sample is carried out by a muffle furnace (e.g., FP-310, available from Yamato Scientific Co., Ltd.) for four hours at 600°C to burn an organic component in the sample. Then, the crucible is cooled for 1 hour in a desiccator to obtain inorganic particles as a sample for measurement. In the case where two or more kinds of inorganic particles are included in the sample, the sheet silicate can be separated by further performing gravity separation.

The method for measuring the mean volume diameter (Mv) of the sheet silicate is not particularly limited. For example, the mean volume diameter (Mv) of the sheet silicate can be measured by the following measuring device under the following measuring conditions. In the present disclosure, the mean volume diameter (Mv) of the sheet silicate is determined as an average particle diameter of the sheet silicate.

[[Measuring device and measuring conditions]]

Device: Microtrac MT3300EX (available from MicrotracBELL Corp.)
Measuring conditions:

Transparency: transparent
Refractive index: 1.53
Shape: non-spherical
Solvent: AIR
Refractive index of solvent: 1
Measuring time: 10 seconds
Extension filter: not activated
Distribution: volume distribution

An aspect ratio of the sheet silicate is not particularly limited, and may be appropriately selected according to the intended purpose. The aspect ratio of the sheet silicate is preferably 10 or greater and 100 or less. When the aspect ratio of the sheet silicate is 10 or greater, the grains of the sheet silicate are suitably aligned to create adequate obstructions for a path through which a gas travels so that an effect of improving an expansion ratio of the foam sheet is obtained. When the aspect ratio of the sheet silicate is 100 or less, the sheet silicate is not ground at the time of kneading of the polylactic acid resin composition and the sheet silicate so that a sufficient effect of substantially increasing an aspect ratio can be obtained.

The aspect of the sheet silicate is determined by the following equation (12).

$$\text{Aspect ratio} = \text{average particle diameter (Mv) of sheet silicate}/\text{average thickness of sheet silicate} \qquad \text{Equation (12)}$$

Methods for measuring the mean volume diameter (mv) of the sheet silicate and the thickness of the sheet silicate in the equation (12) are not particularly limited. For example, the mean volume diameter (Mv) may be determined by the above-described method, and the thickness may be determined in the following method.

As the measuring method of the thickness of the sheet silicate, for example, the sheet silicate is observed under a scanning electron microscope (SEM) (e.g., 3D real surface view microscope, VE-9800, available from KEYENCE CORPORATION). The magnification is adjusted to capture several tens to several hundreds of the particles of the sheet silicate within an observation range. Optionally, two or more views are captured, and the captured images may be connected and provided for image analysis. On the downloaded image, the particle of the sheet silicate whose plane exposing a thickness is aligned along horizontally in the observation view is selected, and the thickness of the selected particle is measured. The measurement is carried out on 50 particles, and the arithmetic mean of the measured values from the 50 particles is calculated, and is determined as an average thickness of the sheet silicate.

An amount of the inorganic particles in the polylactic acid resin composition is not particularly limited, as long as physical properties of the foam sheet are not adversely affected. The amount of the inorganic particles is preferably 0.1% by mass or greater and 10% by mass or less, and more preferably 0.5% by mass or greater and 1.5% by mass or less, relative to a total amount of the polylactic acid resin composition. When the amount of the inorganic particles is 0.1% by mass or greater and 10% by mass or less, a desired expansion ratio is achieved without breaking cell walls with the inorganic particles, a sufficient strength may be imparted to a foam sheet, and a desired specific gravity of the polylactic acid resin composition is obtained to achieve lightness (light in weight) of the foam sheet.

<<Other components>>

The above-mentioned other components in the polylactic acid resin composition are not particularly limited, except that the effects obtainable by the present disclosure are not adversely affected. The above-mentioned other components may be appropriately selected according to the intended purpose. Examples of the above-mentioned other components include a resin component other than the polylactic acid resin, foam nucleating agents other than the inorganic particles, chain extenders other than the epoxy group-containing compound including two or more epoxy groups per molecule, and various additives. The above-listed examples may be used alone or in combination.

-Resin component other than polylactic acid resin-

The resin component other than the polylactic acid resin is not particularly limited, and may be appropriately selected according to the intended purpose. Examples of the resin component include urethane resins, polyester resins, acrylic resins, vinyl acetate-based resins, styrene-based resins, butadiene-based resins, styrene-butadiene-based resins, vinyl chloride-based resins, acrylic styrene-based resins, acrylic silicone-based resins. The above-listed examples may be used alone or in combination.
An amount of the resin component other than the polylactic acid resin in the polylactic acid resin composition is not particularly limited, except that the effects obtainable by the present disclosure are not adversely affected. The amount of the resin component other than the polylactic acid resin may be appropriately selected according to the intended purpose.

-Foam nucleating agents other than inorganic particles-

The foam nucleating agents are preferably added to the polylactic acid resin composition to adjust the state of foam (a size, amount, arrangement, etc., of air bubbles or cells) of the foam sheet.
The foam nucleating agents other than the inorganic particles are not particularly limited, and may be appropriately selected according to the intended purpose. Examples of the foam nucleating agents other than the inorganic particles include organic nucleating agents.
Examples of the organic nucleating agents include natural polymers (e.g., starch, cellulose fibers, cellulose particles, wood meal, soy pulps, rice husks, and bran), modified products of the natural polymers, glycerin compounds, sorbitol compounds, benzoic acids and metal salts of benzoic acids, phosphoric acid ester metal salts, and rosin compounds. The above-listed examples may be used alone or in combination.

-Chain extenders other than epoxy group-containing compound including two or more epoxy groups per molecule-

The chain extenders other than the epoxy group-containing compound including two or more epoxy groups per molecule are not particularly limited, and may be appropriately selected according to the intended purpose. Examples of the chain extenders other than the epoxy group-containing compound including two or more epoxy groups per molecule include compounds reactive with a hydroxyl group and/or a carboxylic acid group, and peroxides. Among the above-listed examples, a compound reactive with a hydroxyl group and/or carboxylic acid group of the polylactic acid resin is preferred because crystallinity of the polylactic acid resin is not inhibited or crystallinity is improved after reaction with the polylactic acid resin. Other than use of the above-mentioned compound above, a method for crosslinking the resin composition using electron beams, etc., is also known.
The compound reactive with a hydroxyl group and/or carboxylic acid group of the polylactic acid resin, other than the epoxy group-containing compound including two or more epoxy groups per molecule, is not particularly limited, and may be appropriately selected according to the intended purpose. Examples of the compound reactive with a hydroxyl group and/or carboxylic acid group of the polylactic acid resin include isocyanate group-containing compounds, carbodiimide group-containing compounds, and oxazoline group-containing compounds. The above-listed examples may be used alone or in combination. Among the above-listed examples, a compound that includes two or more reactive groups per molecule is preferred, and an isocyanate group-containing compound including two or more isocyanate groups per molecule is more preferred, because a branched-chain structure can be imparted to the polylactic acid resin to efficiently improve the viscosity of the polylactic acid resin composition and an amount of free and unreacted molecules of the chain extender can be reduced.

-Isocyanate group-containing compound-

The isocyanate group-containing compound that includes two or more isocyanate groups per molecule and serves as the chain extender (crosslinking agent) is not particularly limited, and may be appropriately selected according to the intended purpose. Examples of the isocyanate group-containing compound serving as the chain extender (crosslinking agent) include aliphatic diisocyanate compounds, alicyclic polyisocyanate compounds, aromatic diisocyanate compounds, triisocyanate compounds, and modified polyisocyanate compounds. The above-listed examples may be used alone or in combination.

Examples of the aliphatic diisocyanate compounds include 1,6-hexamethylenediisocyanate, 3-isocyanatomethyl-3,5,5-trimethylcyclohexylisocyanate (isophorone diisocyanate), 1,4-tetramethylenediisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate)methylcyclohexane, tetramethylxylylene diisocyanate, trans-1,4-cyclohexane diisocyanate, and lysine diisocyanate.

Examples of the alicyclic polyisocyanate compounds include isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate.

Examples of the aromatic diisocyanate compounds include 2,4-tolylene diisocyanate, 2,6-tolylene diisocyanate, diphenylmethane-4,4'-isocyanate, 1,5'-naphthene diisocyanate, tolidine diisocyanate, diphenylmethylmethane diisocyanate, tetraalkyldiphenylmethane diisocyanate, 4,4'-dibenzyldiisocyanate, and 1,3-phenylenediisocyanate.

Examples of the triisocyanate compounds include lysine ester triisocyanate, triphenylmethane triisocyanate, 1,6,11-undecanetriisocyanate, 1,8-isocyanate-4,4-isocyanatemethyloctane, 1,3,6-hexamethylenetriisocyanate, bicycloheptane triisocyanate, adducts between trimethylolpropane and 2,4-toluene diisocyanate, and adducts between trimethylolpropane and diisocyanate (e.g., 1,6-hexamethylene diisocyanate).

Examples of the modified polyisocyanate includes compounds each obtained by reacting a multivalent alcohol (e.g., glycerin and pentaerythritol) with the aliphatic diisocyanate compound, the aromatic diisocyanate compound, and/or the triisocyanate compound.

An amount of the chain extender, other than the epoxy group-containing compound including two or more epoxy groups per molecule, in the polylactic acid resin composition is not particularly limited, and may be appropriately selected according to the intended purpose. A sum of the amount of the epoxy group-containing compound including two or more epoxy groups per molecule and the amount of the chain extender other than the epoxy group-containing compound including two or more epoxy groups per molecule is preferably less than 2% by mass relative to a total amount of organic matter of the polylactic acid resin composition.

-Additives-

The additives are not particularly limited, and may be appropriately selected according to the intended purpose. Examples of the additives include thermal stabilizers, antioxidants, plasticizers, lubricants, crystallization accelerators, and tackifiers. The above-listed examples may be used alone or in combination.

Examples of the tackifiers include polymer tackifiers each having a molecular weight of 1,000,000 or greater.

An amount of the additives in the polylactic acid resin composition is not particularly limited, except that the effects obtainable by the present disclosure are not adversely affected. The amount of the additives may be appropriately selected according to the intended purpose.

In the case where the above-mentioned other components are included in the polylactic acid resin composition, a sum of the amount of the epoxy group-containing compound including two or more epoxy groups per molecule, the amount of the chain extender other than the epoxy group-containing compound including two or more epoxy groups per molecule, and an amount of the above-mentioned other components is not particularly limited, and may be appropriately selected according to the intended purpose. The sum of the above-mentioned amounts is preferably less than 2% by mass relative to a total amount of organic matter of the foam sheet. When the sum of the above-mentioned amounts is less than 2% by mass, biodegradability and recyclability are improved further.

Note that, an amount of each component in the polylactic acid resin composition also encompasses an amount of each component in the foam sheet produced by foaming the polylactic acid resin composition.

As described above, the present disclosure has a characteristic such that the polylactic acid resin composition having high crystallinity is foamed and formed into a foam sheet in a state where crystallinity is low in order to obtain a foam sheet having excellent moldability by thermoforming.

In order to achieve the above-described characteristics, the temperature of the polylactic acid composition from kneading to extruding of the polylactic acid resin composition is maintained at a relatively high temperature, which is equal to or higher than a temperature [Tm-20°C] that is lower than the melting point (Tm) of the polylactic acid resin composition by 20°C. In the above-mentioned temperature range, it is generally difficult to adjust a viscosity of a polylactic acid resin composition to a viscosity range suitable for foaming through cooling of the polylactic acid resin, as disclosed in the related art. Therefore, the polylactic acid resin composition of the present disclosure has a high melt viscosity so that the blowing agent can be retained at a relatively high temperature, which is equal to or higher than the temperature [Tm-20°C] that is lower than the melting point (Tm) of the polylactic acid resin composition by 20°C.

(Method for producing foam sheet)

The foam sheet of the present disclosure is produced by extruding and foaming the polylactic acid resin composition.

As an extruder used for the extrusion foaming, for example, a single-screw extruder, a twin-screw extruder, or a tandem extruder combining any of the foregoing extruders may be used. Among the above-listed examples, a tandem extruder is preferably used because constituent materials of a foam sheet, such as the polylactic acid resin and the epoxy group-containing compound including two or more epoxy groups per molecule, and optionally inorganic particles and the above-mentioned other components, are effectively melt kneaded, and the melt-kneaded product can be cooled to the predetermined temperature and extruded. In view of efficiency of melt kneading and cooling, a tandem extruder including a combination of a twin-screw extruder and a single-screw extruder is most preferred. Moreover, a flowrate regulator, such as a gear pump, may be disposed between the twin-screw extruder and the single-screw extruder, or between the extruder and the die, as necessary.

In the case where a tandem extruder is used, the blowing agent is preferably fed to the extruder of the first stage. As the blowing agent is fed to the extruder of the first stage, the blowing agent is allowed to be in contact with the polylactic acid resin composition for a long period. Therefore, problems associated with swelling of the blowing agent residue remaining without being dissolved, such as partial enlargement of air bubbles or formation of pinholes, may be minimized.

<<Blowing agent>>

The foam sheet can be obtained by, preferably after melt-kneading the polylactic acid resin composition and a blowing agent, extruding and forming the resulting mixture. As the blowing agent, any physical blowing agent available in the related art may be used.

Examples of the physical blowing agent include: hydrocarbons, such as ethane, butane, pentane, hexane, heptane, ethylene, propylene, and petroleum ethers; halogen-based blowing agents, such as methyl chloride, monochlorotrifluoromethane, dichlorodifluoromethane, and dichlorotetrafluoroethane; air; carbon dioxide; and nitrogen.

In view of a low impact to the environment, excellent safety during processing, and easiness of handling, the blowing agent is preferably carbon dioxide or nitrogen. Carbon dioxide is more preferred compared to nitrogen in view of solubility in the polylactic acid resin composition.

However, it is also known that carbon dioxide has the higher vapor pressure than a hydrocarbon-based blowing agent, and the diffusion speed of the carbon dioxide in the polylactic acid resin composition is fast. In the case where carbon dioxide is used as a blowing agent to produce a foam sheet, therefore, foaming occurs rapidly at a high concentration of the blowing agent, at which finely foamed state is achieved. As a result, streaky lines, so called corrugation, may appear to impair an appearance of a resulting foam sheet, a surface of the foam sheet may become rough due to breakage of air bubbles, or an expansion ratio may be reduced.

An amount of the blowing agent is not particularly limited, and may be appropriately selected according to the intended purpose. The amount of the blowing agent is preferably 2 parts by mass or greater and 5 parts by mass or less, and more preferably 2 parts by mass or greater and 4 parts by mass or less, relative to 100 parts by mass of the polylactic acid resin composition. When the amount of carbon dioxide serving as the blowing agent is 2 parts by mass or greater relative to 100 parts by mass of the polylactic acid resin composition, suitable plasticity of the polylactic acid resin composition is achieved, and a desired expansion ratio can be obtained. When the amount of the carbon dioxide is 5 parts by mass or less relative to 100 parts by mass of the polylactic acid resin composition, the polylactic acid resin composition desirably foams to achieve a desired surface texture of a resulting foam sheet without defects in the surface due to rapid foaming.

A T-die or a cyclic die called a circular die (may be also referred to as a "round die") is connected at the edge of the extruder, and the melted mixture is extruded to obtain a foam sheet.

In the case where a foam sheet having a low bulk density is formed, a foam sheet is preferably produced using a circular die because corrugation may be minimized. In this case, a cylindrical foam body extruded from the circular die is preferably placed around a cooled mandrel to cool the foam body, and air is blown onto the outer circumference of the foam body to rapidly cool the foam body. Since the cooling is performed in the above-described manner, crystallization after the extrusion of the foam body can be minimized so that a foam sheet having excellent thermoforming properties can be obtained.

The method for producing the foam sheet of the present disclosure will be more specifically described hereinafter.

The method for producing the foam sheet of the present disclosure preferably includes at least a kneading step, an impregnation step, and a foaming step, and may further include other steps, as necessary.

<Kneading step>

The kneading step includes melting and kneading of the mixture including the polylactic acid resin, the epoxy group-containing compound including two or more epoxy groups per molecule, and optionally the inorganic particles and the above-mentioned other components to obtain a polylactic acid resin composition having a viscosity suitable for foaming. The kneading step preferably includes the melting and the kneading of the mixture using a compressible fluid. The compressible fluid is added for the purpose of plasticizing the polylactic acid resin composition to reduce the load applied to a device. In view of omission of the following impregnation step, the compressible fluid is preferably identical to the blowing agent.

In the case where the epoxy group-containing compound including two or more epoxy groups per molecule is added as the chain extender, the polylactic acid resin and the epoxy group-containing compound including two or more epoxy groups per molecule are reacted to adjust the viscosity of the polylactic acid resin composition in the kneading step. Since the epoxy group-containing compound including two or more epoxy groups per molecule is used as the chain extender, a temperature of the kneading step is preferably equal to a melting point of the polylactic acid resin composition or higher and 240°C or lower, and more preferably 220°C or higher and 240°C or lower. When the temperature of the kneading step is equal to a melting point of the polylactic acid resin composition or higher and 240°C or lower, the viscosity of the polylactic acid resin composition is effectively improved, and elution of the unreacted epoxy group-containing compound including two or more epoxy groups per molecule can be reduced.

<Impregnation step>

The impregnation step includes melting and kneading the polylactic acid resin composition and the blowing agent to obtain a foamable polylactic acid resin composition. The solubility (solubility rate) of the blowing agent in the polylactic acid resin composition may vary depending on a temperature and pressure of the impregnation step. The temperature and pressure of the impregnation step may be appropriately set while closely monitoring the state of the foam sheet. The solubility of the blowing agent in the polylactic acid resin composition is generally increased by increasing the pressure, or lowering the temperature of the polylactic acid resin composition.

In the present disclosure, the term "foamable polylactic acid resin composition" encompasses a composition in which the blowing agent is dissolved and/or dispersed in the polylactic acid resin composition, and is a composition that will be foamed as the pressure is released from the pressure inside the extruder to the atmospheric pressure in the below-described foaming step.

The impregnation step is preferably carried out, while gently cooling the foamable polylactic acid resin composition. A tandem extruder combining a twin-screw extruder and a single-screw extruder enables to dissolve the blowing agent, while gently cooling the polylactic acid resin composition by the single-screw extruder. Therefore, the tandem extruder is suitable for the production of the foam sheet of the present disclosure.

<Foaming step>

The foaming step includes extruding the foamable polylactic acid resin composition obtained in the impregnation step by an extruder to obtain a foamed body. The foaming step preferably includes vaporizing and removing the compressible fluid serving as the blowing agent, which has been dissolved in the foamable polylactic acid resin composition obtained in the impregnation step, to generate air bubbles in the polylactic acid resin composition to foam the polylactic acid resin composition, and extruding the polylactic acid resin composition by the extruder to mold the polylactic acid resin composition. In the foaming step, the pressure difference between the pressure inside the extruder and the atmospheric pressure acts as a driving force for foaming.

The temperature of the foamable polylactic acid resin composition in the foaming step is preferably adjusted to the range of approximately 150°C to approximately 160°C. The temperature of the foaming step is a temperature of the die. As the temperature of the foaming step is adjusted to the above-mentioned range, the viscosity of the foamable polylactic acid resin composition can be adjusted to the range suitable for foaming, while suppressing crystallization.

When the die is cooled to approximately 130°C, as disclosed in the related art literatures, crystallization progresses, which may impair thermoforming of the foam sheet, or the die may be blocked with crystals. Since the temperature of the foaming step is adjusted to the above-mentioned range, the viscosity of the foamable polylactic acid resin composition can be adjusted to suit foaming, while suppressing crystallization.

The kneading step and the impregnation step may be performed at the same time. Alternatively, only the kneading step is performed to obtain a polylactic acid resin composition, followed by performing the impregnation step and the foaming step to obtain a foam body.

The non-foamable polylactic acid resin composition obtained by performing only the kneading step may be referred to as a master batch or simply a polylactic acid resin composition.

Next, an example of a device for carrying out the kneading step will be described with reference to a drawing. However, the kneading step performed in association with the present disclosure is not limited to the following example.

Fig. 2 is a schematic view illustrating a twin-screw extruder (continuous kneader) 100 as an example of a kneader of the foam sheet production apparatus of the present disclosure. For example, the twin-screw extruder 100 has a screw diameter of 42 mm, and a ratio [L/D] of 48, where L is a length of the extruder, and D is the screw diameter. In the present embodiment, for example, at least the polylactic acid resin and the epoxy group-containing compound including two or more epoxy groups per molecule are supplied from are supplied from a first feeder 1 and a second feeder 2 to a constituent-material mixing and melting section a, and the supplied materials are melted. In the case where the polylactic acid resin composition includes a component (e.g., inorganic particles) other than the polylactic acid resin and the epoxy group-containing compound including two or more epoxy groups per molecule, the component other than the polylactic acid resin and the epoxy group-containing compound including two or more epoxy groups is also supplied, and melted and mixed. In the case where the polylactic acid resin composition includes three or more components, the number of feeders may be appropriately increased, or some of components may be mixed with the polylactic acid resin in advance, followed by supplying the resulting mixture from the feeder to the constituent-material mixing and melting section a.

Carbon dioxide, preferably a compressible fluid of carbon dioxide, is supplied to the mixed and melted constituent materials from a compressible fluid reservoir 3 into a compressible-fluid feeding section b. Subsequently, the mixture including the compressible fluid is kneaded in a kneading section c. The compressible fluid F is removed from the mixture in a compressible-fluid removing section d, and the mixture is, for example, formed into resin pellets P in a mold processing section e. In the manner as described above, a polylactic acid resin composition (master batch) is obtained.

As a compressible fluid serving as the blowing agent, a gas that is cooled and liquidized is supplied by a metering pump. Solid constituent materials are supplied by a constant feeder. For example, carbon dioxide in the state of a compressible fluid serving as the blowing agent, which is prepared by cooling and liquidizing the carbon dioxide, is supplied by a metering pump. The solid constituent materials, such as resin pellets and a foam nucleating agent, may be supplied, for example, by a constant feeder.

In the case where the kneading step and the impregnation step, and the foaming step are sequentially carried out, the blowing agent is preferably used as the compressible fluid. In this case, the removal of the compressible fluid F is not carried out in the compressible-fluid removing section d.

Next, each process carried out in each section of the kneader illustrated in Fig. 2 will be described.

-Constituent-material mixing and melting section a-

In the constituent-material mixing and melting section a, resin pellets and optional components other than the polylactic acid resin are mixed and heated. The heating temperature is set at a temperature equal to or higher than a melting point of the resin so that the mixture of the constituent materials is turned into a state where the mixture can be homogeneously mixed with a compressible fluid F in the following compressible-fluid feeding section b.

-Compressible-fluid feeding section b-

In the compressible-fluid feeding section b, a compressible fluid F is supplied to the resin pellets that have been heated and turned into the melted state, to plasticize the melted resin.

-Kneading section c-

In the kneading section c, the components other than the polylactic acid resin are homogeneously dispersed in the polylactic acid resin. The set temperature may be changed according to specifications of a reactor or a load. The set temperature is preferably a melting point of the polylactic acid resin composition or higher and 240°C or lower.

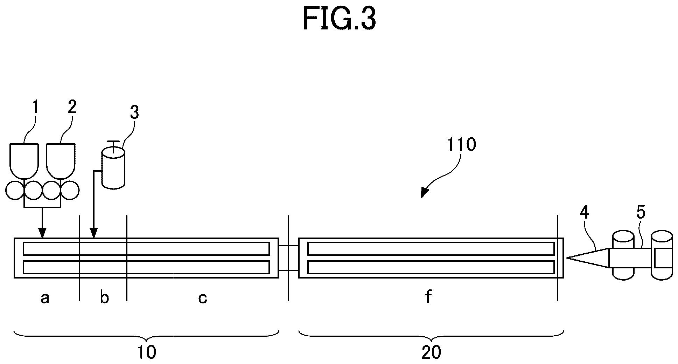

An example of the foam sheet production apparatus (continuous foam sheet production apparatus 110), in which the kneading and the foaming are consecutively performed is illustrated in Fig. 3.

As the continuous foam sheet production apparatus 110, a tandem extruder in which a kneader 10 and a single-screw extruder 20 are linked may be used. In the continuous foam sheet production apparatus 110, for example, constituent materials, such as a polylactic acid resin, a foam nucleating agent, and a chain extender, are supplied from a first feeder 1 and a second feeder 2 to a constituent-material mixing and melting section a, and the supplied materials are mixed and melted.

In a compressible-fluid feeding section b, a compressible fluid serving as a blowing agent is supplied to the mixed and melted constituent materials from a compressible fluid reservoir 3. Subsequently, the resulting mixture including the compressible fluid as the blowing agent is kneaded in a kneading section c to prepare a foamable polylactic acid resin composition.

The foamable polylactic acid resin composition is supplied to a temperature adjusting section f. In the temperature adjusting section f, the temperature of the foamable polylactic acid resin composition is adjusted to a temperature suitable for foaming, and the blowing agent is further dissolved. Subsequently, the foamable polylactic acid resin composition is extruded from a die into the atmosphere to obtain a cylindrical foam body 4. The obtained cylindrical foam body 4 is placed around a cooling mandrel 5 and air is blown onto the outer circumference of the cylindrical foam body 4 to cool the cylindrical foam body 4. Part of the foam body 4 is cut open by a rotary blade to flatten the foam body, and the cut-open foam body is rolled up as a roll to thereby obtain a foam sheet of the present disclosure.

In the present disclosure, the temperature of the kneading section c is preferably equal to or higher than the melting point of the polylactic acid resin composition and 240°C or lower, more preferably 220°C or higher and 240°C or lower. Moreover, the temperature of the temperature adjusting section f is preferably equal to or higher than a temperature [Tm-20°C] that is lower than the melting point (Tm) of the polylactic acid resin composition by 20°C.

In the above-described example, the kneading step is performed by the kneader 10, and the foaming step is performed by the single-screw extruder 20. However, the present disclosure is not limited to the above-described structure. For example, a section where the kneading step is carried out and a section where the foaming step is carried out may be appropriately changed.

(Product and molded product)

The product of the present disclosure includes a product main body, an entire part or a part of which includes the foam sheet of the present disclosure. The product of the present disclosure may be a product composed of the foam sheet of the present disclosure. Alternatively, the product of the present disclosure may further include other components, as necessary.

The molded product of the present disclosure includes the foam sheet of the present disclosure having a shape achieved by thermoforming. The molded product of the present disclosure may be a molded product composed of the foam sheet of the present disclosure. Alternatively, the molded product may further include other components, as necessary.

The above-mentioned other components included in the product or the molded product are not particularly limited, except that the components are components used for typical resin products. The above-mentioned other components may be appropriately selected according to the intended purpose.

The product and the molded product are resistant to heat, and have excellent surface properties.

A temperature for the thermoforming is not particularly limited, but the temperature for the thermoforming is preferably 100°C or higher and 150°C or lower. When the thermoforming is performed within the above-mentioned temperature range, crystallization of the polylactic acid resin easily progresses, and a shape of the product or molded product can be fixed so that the product or molded product having excellent thermal resistance can be obtained.

Since the foam sheet of the present disclosure has excellent moldability, biodegradability, strength, thermal insulation properties, and thermal resistance, the product including the foam sheet and the molded product obtained by thermoforming the foam sheet also have excellent biodegradability, strength, thermal insulation properties, and thermal resistance. Therefore, the product and molded product are suitably used for containers, bags, packaging materials, dishes, cutleries, stationaries, buffer materials, and packing materials.

The term "molded product" also includes, as an intermediate product to be processed into the molded product, a roll of the foam sheet. Moreover, the term "molded product" includes, as well as the molded product itself as a single product, parts each composed of the molded product, such as handles of a tray, or a product equipped with one or more molded products, such as a tray with handles.

An embodiment of the container is not particularly limited and may be appropriately selected. For example, the container may be a container without a lid, such as a tray, or a container whose opened area is sealed with a shrink film, top sealing, or fitted lid. Moreover, the container of the present disclosure also includes a lid of a container, and the container of the present disclosure may be used as a lid of a container.

Examples of the bags include carrier bags, shopping bags, and bin bags.

Moreover, the molded product may be applied for use other than the above-mentioned uses. For example, the molded product may be widely applied to a variety of uses, such as sheets or packaging materials for industrial materials, daily necessities, agricultural products, food products, medical products, or cosmetic products.

Moreover, the foam sheet may be subjected to processing, such as laminating and coating, as necessary. The processing may be performed before winding the foam sheet up during the production of the foam sheet, or the processing may be performed on the foam sheet that has been wound up into a roll after the production. A laminate film or coating agent used, and a processing method are not particularly limited and may be appropriately selected.

The molded product may no longer have characteristics of the foam sheet, but such molded product is still within the scope of the present disclosure, as long as the molded product uses the foam sheet as a constituent material.

<Method for producing molded product and molded product production apparatus>

The method for producing the molded product is not particularly limited, and may be appropriately selected according to a desired shape of a molded product. In the case where a molded product is produced by thermoforming, the method preferably includes a heating step and a thermoforming step, and may further include other steps, as necessary.

The molded product production apparatus is not particularly limited, and may be appropriately selected according to a desired shape of a molded product. The molded product production apparatus preferably includes a heater and a thermoforming member, and may further include other devices or members, as necessary.

The method for producing the molded product is suitably performed by the molded product production apparatus.

<<Heating step and heater>>

The heating step includes, before molding the foam sheet of the present disclosure, heating the foam sheet to soften the foam sheet.

The heater is a member configured to heat the foam sheet to soften the foam sheet before molding the foam sheet of the present disclosure.

The heating step is suitably performed by the heater.

A method for heating the foam sheet in the heating step is not particularly limited, and may be appropriately selected according to the intended purpose. Examples of the method include: a method where the heater is placed at both the upper side and the bottom side of the foam sheet, or either the upper side or the bottom side of the foam sheet to heat the foam sheet.

The heater is not particularly limited, and may be appropriately selected from heaters available in the related art. Examples of the heater include electrothermal heaters, heating plates, and infrared (IR) heaters.

The crystallization of the polylactic acid resin is preferably not carried out in the heating step before molding of the foam sheet, but the crystallization of the polylactic acid resin is preferably carried out in the following thermoforming step, because thermal resistance can be improved. Therefore, the heating step preferably includes heating the foam sheet within a short period, more preferably placing infrared (IR) heaters at the upper side and the bottom side of the foam sheet, respectively, to heat the foam sheet.

A heating temperature of the foam sheet in the heating step is not particularly limited, and may be appropriately selected according to the intended purpose. The heating is preferably performed at a temperature equal to or higher than the glass transition temperature of the polylactic acid resin, more preferably at a temperature of 60°C or higher, and yet more preferably 80°C or higher. If the foam sheet is heated at a temperature close to the cold crystallization temperature of the polylactic acid resin, crystallization of the polylactic acid resin progresses. Therefore, the highest heating temperature of the foam sheet in the heating step is preferably 110°C or lower. The lower limit and upper limit of the heating temperature may be appropriately selected. The heating temperature of the foam sheet in the heating step is more preferably 60°C or higher and 100°C or lower, particularly preferably 80°C or higher and 100°C or lower.

The heating temperature is a temperature of the foam sheet itself. The heating time of the foam sheet in the heating step is not particularly limited, and may be appropriately selected according to the intended purpose. In view of inhibition of crystallization in the heating step, the heating time is preferably 15 seconds or shorter, more preferably 10 seconds or shorter, and yet more preferably 5 seconds or shorter.

<<Thermoforming step>>

The thermoforming step includes molding the softened foam sheet in the heating step using a mold, preferably a die. The thermoforming step preferably includes molding the foam sheet into a shape of a container.

A molding method using the mold is not particularly limited, and any thermoforming methods for thermoplastic resins available in the related art may be used. Examples of the molding method include vacuum forming, pressure forming, vacuum and pressure forming, and matched mold forming. Among the above-listed examples, matched mold forming is particularly preferred because crystallization of the polylactic acid resin of the foaming sheet is facilitated during molding to improve thermal resistance.

A temperature of the mold in the thermoforming step is not particularly limited, and may be appropriately selected according to the intended purpose. The thermoforming is preferably performed at a temperature close to the cold crystallization temperature of the polylactic acid resin to facilitate crystallization of the polylactic acid resin in the foam sheet.

In the present specification, the "temperature close to the cold crystallization temperature of the polylactic acid resin" encompasses a temperature that is equal to or higher than the cold crystallization temperature of the polylactic acid resin by 30°C or less. Specifically, the temperature of the die in the thermoforming step is preferably 100°C or higher and 130°C or less. Since the thermoforming is performed with the molding the temperature of which is adjusted to close to the cold crystallization temperature in the thermoforming step, a molded body having a difference (B-A) of 20.0% or greater and 40.0% or less is obtained, where B is the crystallinity of the molded product and A is the crystallinity of the foam sheet.

A thermoforming time in the thermoforming step is not particularly limited, and may be appropriately selected according to the intended purpose. The thermoforming time is preferably long enough to crystallize the foam sheet, and the thermoforming time is preferably short in view of productivity. When the thermoforming time in the thermoforming step is 5 seconds or longer and 10 seconds or shorter, a foam sheet achieves both thermal resistance and productivity.

<<Other steps and other devices or members>>

The above-mentioned other steps are not particularly limited, and may be appropriately selected according to the intended purpose. Examples of the above-mentioned other steps include releasing the molded product from the mold, punching the molded product from the foam sheet, and cutting off excess parts from the foam sheet excluding the part of the molded product.

Examples

The present disclosure will be concretely described below by way of Examples and Comparative Examples. The present disclosure should not be construed as being limited to these Examples. In Examples and Comparative Examples, "part(s)" denotes "part(s) by mass" and "%" denotes "% by mass" unless otherwise stated.

(Example 1)

<Production of foam sheet>

-Mixing and melting of constituent materials-

Using a tandem continuous-type foam sheet production apparatus 110 illustrated in Fig. 3, the constituent-material mixing and melting section a of the kneader 10 was charged with 98.1 parts of a polylactic acid (PLA-A) having the physical properties presented in Table 1, 1 part of inorganic particles (AEROSIL® RY300, silica, available from NIPPON AEROSIL CO., LTD.), and 0.9 parts of a chain extender (epoxy functional, MARPROOF™ G-0250SP, epoxy equivalent: 310, weight average molecular weight: 15,700, available from NOF CORPORATION) so that a feeding rate of a resulting polylactic acid resin composition including the polylactic acid resin, the inorganic particles, and the chain extender was 20 kg/hour.

-Supply of compressible fluid, kneading and impregnation-

Subsequently, carbon dioxide in the state of a compressible fluid serving as a blowing agent was supplied to the compressible-fluid feeding section b of the kneader 10 at a feeding rate of 0.76 kg/hour (equivalent to 3.8 parts of the carbon dioxide relative to 100 parts by mass of the polylactic acid resin composition), and the resulting mixture was mixed, melted, and kneaded in the kneading section c, followed by supplying the resulting mixture to the single-screw extruder 20.

-Foaming-

Subsequently, the temperature of the polylactic acid resin composition was adjusted in the temperature adjusting section f of the single-screw extruder 20, which was set to cool the temperature from 180°C to 160°C. At the edge of the channel of the circular die having a diameter of 76 mm attached to the edge of the single-screw extruder, clearance was adjusted to secure a standard opening area. Then, the polylactic acid resin composition was ejected from the circular die into the atmosphere to perform extrusion foaming.

-Molding-

The obtained cylindrical foam sheet was placed along a mandrel 5 having a diameter of 165 mm, which was cooled with a coolant, and air was blown onto the outer surface of the foam sheet to carry out forced cooling. The foam sheet was then cut by a rotary blade cutter to obtain a foam body in the shape of a flat sheet (may be referred to as a "foam sheet" of Example 1 hereinafter). The winding speed of the foam sheet was 2.4 m/min.

In Example 1, the temperature of each section was adjusted as follows.

> Constituent-material mixing and melting section a of kneader: 200°C
> Compressible-fluid feeding section b of kneader: 240°C
> Kneading section c of kneader: 240°C
> Temperature adjusting section f of single-screw extruder: cooling from 180°C to 160°C
> Circular die: 155°C

In Example 1, the pressure of each section was adjusted as follows.

> Compressible-fluid feeding section b of kneader: from 7 MPa to 10 MPa
> Kneading section c of kneader: from 8 MPa to 25 MPa
> Temperature adjusting section f of single-screw extruder: from 8 MPa to 40 MPa
> Pressure prior to circular die: 28 MPa to 40 MPa

(Example 2)

A foam sheet of Example 2 was obtained in the same manner as in Example 1, except that the chain extender was changed from MARPROOF™ G-0250SP (available from NOF CORPORATION) to Joncryl® ADR-4368C (epoxy functional, epoxy equivalent: 285, weight average molecular weight: 6,800, available from BASF SE).

(Example 3)

A foam sheet of Example 3 was obtained in the same manner as in Example 1, except that the polylactic acid resin was changed from PLA-A to PLA-B, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Example 4)

A foam sheet of Example 4 was obtained in the same manner as in Example 1, except that the polylactic acid resin used and the amount of the polylactic acid resin were changed from 98.1 parts of PLA-A to 97 parts of PLA-B, and the amount of the chain extender was changed from 0.9 parts to 2 parts.

(Example 5)

A foam sheet of Example 5 was obtained in the same manner as in Example 1, except that the polylactic acid resin was changed from PLA-A to PLA-C having the physical properties presented in Table 1, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Example 6)

A foam sheet of Example 6 was obtained in the same manner as in Example 1, except that the polylactic acid resin was changed from PLA-A to PLA-D having the physical properties presented in Table 2, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Example 7)

A foam sheet of Example 7 was obtained in the same manner as in Example 1, except that the polylactic acid resin used and the amount of the polylactic acid resin were changed from 98.1 parts of PLA-A to 99.1 parts of PLA-D, the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE), and the inorganic particles were not added.

(Example 8)

A foam sheet of Example 8 was obtained in the same manner as in Example 1, except that the polylactic acid resin was changed from PLA-A to PLA-D having the physical properties presented in Table 2, the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE), and the inorganic particles were changed from AEROSIL® RY300 (silica, available from NIPPON AEROSIL CO., LTD.) to M-400 (mica, available from Repco Inc.).

(Example 9)

A foam sheet of Example 9 was obtained in the same manner as in Example 1, except that the feeding rate of the carbon dioxide that was the compressible fluid serving as the blowing agent was changed from 0.76 kg/hour (equivalent to 3.8 parts relative to 100 parts of the polylactic acid resin composition) to 0.96 kg/hour (equivalent to 4.8 parts relative to 100 parts of the polylactic acid resin composition).

(Example 10)

A foam sheet of Example 10 was obtained in the same manner as in Example 1, except that the chain extender was changed from MARPROOF™ G-0250SP (available from NOF CORPORATION) to MARPROOF™ G-01100 (epoxy functional, epoxy equivalent: 170, weight average molecular weight: 9,000, available from NOF CORPORATION).

(Comparative Example 1)

A foam sheet of Comparative Example 1 was obtained in the same manner as in Example 1, except that the polylactic acid resin was changed from PLA-A to PLA-E having the physical properties presented in Table 3, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Comparative Example 2)

Comparative Example 2 was carried out in the same manner as in Example 1, except that the chain extender and the inorganic particles were not added, and the amount of PLA-A was changed to 100 parts by mass. However, a melt viscosity of the polylactic acid resin composition was low and it was difficult to wind the foam sheet along the cooled mandrel, thus the foam sheet was not formed.

(Comparative Example 3)

Comparative Example 3 was carried out in the same manner as in Example 1, except that the polylactic acid resin was changed from PLA-A to PLA-F having the physical properties presented in Table 3, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE). However, a melt viscosity of the polylactic acid resin composition was low and it was difficult to wind the foam sheet along the cooled mandrel, thus the foam sheet was not formed.

(Comparative Example 4)

A foam sheet of Comparative Example 4 was obtained in the same manner as in Example 1, except that the reduction in the temperature of the temperature adjusting section f was changed from the temperature reduction of 180°C to 160°C to the temperature reduction of 180°C to 150°C, the temperature of the circular die was changed from 155°C to 150°C, and the cooling with the coolant of the mandrel and air cooling was not carried out in the molding. However, the foam sheet was torn during molding.

(Comparative Example 5)

A foam sheet of Comparative Example 5 was obtained in the same manner as in Example 1, except that the polylactic acid resin was changed from PLA-A to PLA-G having the physical properties presented in Table 3, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Comparative Example 6)

A foam sheet of Comparative Example 6 was obtained in the same manner as in Example 1, except that the polylactic acid resin was changed from PLA-A to PLA-H having the physical properties presented in Table 4, and the chain extender was changed from MARPROOF™ G-0250SP (available from NOF CORPORATION) to Joncryl® ADR-4468 (epoxy functional, epoxy equivalent: 310, weight average molecular weight: 7,250, available from BASF SE).

(Comparative Example 7)

A foam sheet of Comparative Example 7 was obtained in the same manner as in Example 1, except that the chain extender was changed from MARPROOF™ G-0250SP (available from NOF CORPORATION) to MARPROOF™ G-0130SP (epoxy functional, epoxy equivalent: 530, weight average molecular weight: 8,400, available from NOF CORPORATION).

(Comparative Example 8)

A foam sheet of Comparative Example 8 was obtained in the same manner as in Example 1, expect that the chain extender was changed from MARPROOF™ G-0250SP (available from NOF CORPORATION) to Carbosista® TCC-NP (available from TEIJIN LIMITED).

<Measurement of physical properties>

The foam sheets of Examples 1 to 10 and Comparative Examples 1 to 8 were each subjected to the measurement of "an amount of the polylactic acid resin relative to a total amount of organic matter of the foam sheet," "a weight average molecular weight of the polylactic acid resin," "a terminal hydroxyl group content of the polylactic acid resin," "an acid value of the polylactic acid resin," "a molar ratio between D-lactic acid and L-lactic acid constituting the polylactic acid resin in the foam sheet," "a bulk density of the foam sheet," "a basis weight of the foam sheet," "cold crystallization enthalpy of the foam sheet," and "recrystallization enthalpy of the foam sheet" in the following manner. The measurement results are presented in Tables 1 to 4.

<<Measurement of amount of polylactic acid resin relative to total amount organic matter of foam sheet>>

An amount of the polylactic acid resin relative to a total amount of organic matter of each of the foam sheets of Examples 1 to 10 and Comparative Examples 1 to 8 was measured in the following manner.

-Preparation of solvent-

As a solvent used for the measurement, approximately 100 mg of a 1,3,5-trimethoxybenzene standard (for quantitative NMR, available from FUJIFILM Wako Pure Chemical Corporation) was weighed as an internal standard substance, and the collected standard substance was dissolved in deuterated chloroform (including 0.3% by volume of tetramethylsilane (TMS)) in a 10 mL volumetric flask to prepare the solvent.

-Preparation of sample-

The solvent was added to each of the foam sheets of Examples 1 to 10 and Comparative Examples 1 to 8 so that a concentration of the foam sheet was 10 mg/mL. The resulting mixture was shaken by a table top shaker (MSI-60, available from AS ONE Corporation) for about half a day to dissolve the foam sheet. In order to minimize a change in the sample concentration due to evaporation of the solvent as much as possible, the smallest container available was selected for use in the shaking. The sample prepared in the above-described manner was placed in a sample tube having a diameter of 5 mm, which was provided for NMR.

-Measurement-

Quantitative $^1$H nuclear magnetic resonance spectroscopy ($^1$H-NMR) was performed by the following measuring device under the following measuring conditions according to JIS K 0138:2018 (General rules for quantitative nuclear magnetic resonance spectroscopy (qNMR)).

[[Measuring device and measuring conditions]]

Nuclear magnetic resonance (NMR) spectrometer: JNM-ECX-500 FT-NMR (available from JEOL Ltd.)
Observed nuclei: $^1$H
Measuring temperature: 30°C
Spin: off
Digital resolution: 0.25 Hz
Observation range: -0.5 ppm to 15 ppm
Pulse angle: 90 degrees
Relaxation time: 60 seconds
Number of integration: 16 times (dummy scanning was performed twice before the actual measurement)
13C decoupling: performed

-Analysis-

Based on the obtained data, integration of the following chemical shift peaks was carried out to calculate an integration ratio according to the following equation (5). Integration 1 (derived from polylactic acid resin): 5.2 ppm Integration 2 (derived from internal standard): 6.1 ppm

```
Integration ratio = Integration 1/(Integration 2 × sample mass)
                                                    Equation (5)
```

NMR was performed on a polylactic acid resin whose purity was known using the same solvent used for the above-mentioned sample in the same manner as in the above-described NMR. A ratio of the integration ratio of the polylactic acid resin whose purity had been known according to the equation (5) and the integration ratio of the sample was determined to calculate an amount of the polylactic acid resin relative to a total amount of organic matter in the foam sheet according to the following equation (6). The series of processes from the preparation of the sample to the analysis was performed three times, and the arithmetic mean of the obtained amounts of the polylactic acid resin was determined as an amount of the polylactic acid resin relative to a total amount of organic matter of the foam sheet.

```
Amount of polylactic acid resin [% by mass] = 100 × purity [% by
mass] of polylactic acid resin whose purity is known ×
(integration ratio of sample)/(integration ratio of polylactic
acid resin whose purity is known)
                                                    Equation (6)
```

The series of processes from the preparation of the sample to the analysis was performed three times, and the arithmetic means of the obtained amounts of the polylactic acid resin was determined as an amount of the polylactic acid resin relative to total amount of organic matter of each of the foam sheets of Examples 1 to 10 and Comparative Examples 1 to 8.

<<Measurement of weight average molecular weight of polylactic acid resin>>

-Preparation of sample-

Each of the foam sheets of Examples 1 to 10 and Comparative Examples 1 to 8 and chloroform were mixed so that a concentration of the polylactic acid resin was 2 mg/mL. The resulting mixture was shaken by a table top shaker (MSI-60 available from AS ONE Corporation) for about half a day. After confirming that the foam sheet was dissolved, the resulting solution was filtered with a 0.45 μm-membrane filter to collect a filtrate. The collected filtrate was used as a sample.

-Measurement-

The prepared sample was measured by GPC under the following measuring conditions to measure a weight average molecular weight (Mw) of the polylactic acid resin.

[[Measuring device and measuring conditions]]

Device: HLC-8320GPC (available from Tosoh Techno-System, Inc.)
Columns: TSKgel® (registered trademark) guard column SuperHZ-L and 4 columns of TSKgel SuperHZM-M
Detector: RI
Measuring temperature: 40°C
Mobile phase: chloroform
Flow rate: 0.45 mL/min
Injection amount: 20 μL

<<Measurement of terminal hydroxyl group content of polylactic acid resin>>

-Preparation of sample-

As a reference substance for a chemical shift, deuterochloroform including tetramethylsilane (TMS) (0.05 vol% TMS-containing deuterochloroform for NMR, available from FUJIFILM Wako Pure Chemical Corporation) was passed through a column filled with potassium carbonate just before mixing the TMS-containing deuterochloroform with each of the foam sheets of Examples 1 to 10 and Comparative Examples 1 to 8. The column filled with the potassium carbonate was prepared by filling an edge of a Pasteur pipette with cotton wool, followed by filling up to approximately 5 cm with potassium carbonate granules. The fraction of the fluid (approximately 2 mL to approximately 3 mL) initially passed through the column was not used for the preparation of a sample.

Each of the foam sheets of Examples 1 to 10 and Comparative Examples 1 to 8 was mixed with the TMS-containing deuterochloroform so that a concentration of the foam sheet was 10 mg/mL. The resulting mixture was shaken by a table top shaker (MSI-60, available from AS ONE Corporation) for about half a day, while retaining the temperature at 30°C, to completely dissolve the foam sheet. The resulting solution was filtered with a 0.45 μm-membrane filter to collect a filtrate. The collected filtrate was used as a sample for NMR.

-Measurement-

The sample was sealed in an NMR sample tube having a diameter of 5 mm, and the sample was provided for $^1$H nuclear magnetic resonance spectroscopy ($^1$H-NMR) that was performed by the following measuring device under the following measuring conditions according to JIS K0138:2018 (General rules for quantitative nuclear magnetic resonance spectroscopy (qNMR)).

[[Measuring device and measuring conditions]]

Nuclear magnetic resonance (NMR) spectrometer: JNM-ECX-500 FT-NMR (available from JEOL Ltd.)
Observed nuclei: $^1$H
Measuring temperature: 30°C
Spin: off
Digital resolution: 0.25 Hz
Observation range: -0.5 ppm to 15 ppm
Pulse angle: 90 degrees
Relaxation time: 60 seconds
Number of scans: 16 times (dummy scanning is performed twice before the actual measurement)
13C decoupling: performed

-Analysis-

The FID data obtained by the measurement above was converted into a spectrum by Fourier transform without using a window function, and Integrations 3 and 4 of the following chemical shift peaks were performed to calculate a terminal OH content according to the following equation (7).

The integrations were carried out using the function included in commercially available analysis software. At the time of the analysis, the chemical shifts were corrected so that the chemical shift of the TMS added as the internal reference was 0 ppm. Optionally, base line corrections and smoothing were carried out.

Integration 3: 5.08 ppm to 5.28 ppm
Integration 4: 4.30 ppm to 4.40 ppm

$$\text{Terminal OH content} = 1{,}000 \times (\text{Integration 4})/(\text{Integration 3})$$

$$\text{Equation (7)}$$

<<Measurement of acid value of polylactic acid resin>>

-Preparation of sample-

Into an Erlenmeyer flask, 1 g of each of the foam sheets of Examples 1 to 10 and Comparative Examples 1 to 8 and 40 mL of dichloromethane were added. The resulting mixture was shaken at room temperature for about half a day to prepare a dichloromethane solution of the polylactic acid resin. The obtained solution was provided as a sample for measurement.

-Measurement-

To the sample, phenolphthalein was added as an indicator. The sample and a blank were each titrated using a 0.01 N potassium hydroxide ethanol solution, and an acid value of the sample was calculated according to the following equation (6).

$$\text{Acid value [mgKOH/g]} = (\text{titration amount [mL]} - \text{blank [mL]}) \times$$

$$\text{factor} \times 0.01 \text{ [N]} \times 56.1 \text{ [g/mol]}/(\text{mass of sample [g]})$$

$$\text{Equation (6)}$$

<<Measurement of molar ratio between D-lactic acid and L-lactic acid constituting polylactic acid resin in foam sheet>>

-Preparation of sample-

Each of the foam sheets of Examples 1 to 10 and Comparative Examples 1 to 8 was frozen and ground to prepare a powder of the foam sheet. Two hundred milligrams (200 mg) of the powder of the foam sheet obtained by the cryogenic grinding was weighed and collected in an Erlenmeyer flask using a precision balance, followed by adding 30 mL of a 1 N sodium hydroxide aqueous solution. Next, the resulting mixture was heated at 65°C, while shaking the Erlenmeyer flask, to completely dissolve the polylactic acid resin. Subsequently, pH of the resulting solution was adjusted to 7 with 1 N hydrochloric acid, and the resulting solution was diluted to the predetermined volume using a volumetric flask to obtain a polylactic acid resin solution. The polylactic acid resin solution was filtered with a membrane filter of 0.45 $\mu$m, and the resulting filtrate was provided as a sample.

-Measurement-

The prepared sample was analyzed by liquid chromatography under the following measuring conditions.

[[Measuring device and measuring conditions]]

High performance liquid chromatography (HPLC) device (liquid chromatograph): PU-2085Plus system (available from JASCO Corporation)

Column: Chromolith® coated with SUMICHIRAL OA-5000 (inner diameter: 4.6 mm, length: 250 mm)(available from Sumika Chemical Analysis Service, Ltd.)

Column temperature: 25°C

Mobile phase: a mixed liquid of a 2 mM $CuSO_4$ aqueous solution and 2-propanol ($CuSO_4$ aqueous solution:2-propanol (volume ratio) = 95:5)

Mobile phase flow rate: 1.0 mL/min

Detector: UV 254 nm

Injecting amount: 20 $\mu$L

-Analysis-

Based on the obtained chart, the area of the peak derived from the D-lactic acid and the area of the peak derived from the L-lactic acid, and a total area were determined. Based on the determined peak areas and the total area, a peak area ratio derived from the D-lactic acid and a peak area ratio derived from the L-lactic acid were calculated and determined as abundance ratios to calculate a quantity ratio of the D-lactic acid and a quantity ratio of the L-lactic acid. An arithmetic mean of the measured values obtained by performing the above-described measurement three times was determined as an amount of the D-lactic acid or an amount of the L-lactic acid constituting the polylactic acid resin in the foam sheet. The results are presented as "molar ratio (L-lactic acid:D-lactic acid)" in Tables 1 to 4 below.

<<Measurement of bulk density of foam sheet>>

Each of the foam sheets of Examples 1 to 10 and Comparative Examples 1 to 8 was left to stand for 24 hours or longer in an environment controlled at a temperature of 23°C and relative humidity of 50%, followed by cutting out a test piece of 50 mm × 50 mm from the foam sheet. A bulk density of the test piece was determined by a fully automated densimeter (DSG-1 available from Toyo Seiki Seisaku-sho, Ltd.) according to a buoyancy method. According to the buoyancy method, a mass (g) of the test piece of the foam sheet was accurately weighed in the atmosphere, then a mass (g) of the test piece of the foam sheet was accurately weighed in water. The bulk density was calculated from the measured values according to the following equation (1).

$$\text{Bulk density } [g/cm^3] = \text{liquid density of sample piece } [g/cm^3] \times \text{mass of test piece in atmosphere } [g]/(\text{mass of test piece in atmosphere } [g] - \text{mass of test piece in liquid } [g])$$

$$\text{Equation (1)}$$

<<Measurement of basis weight of foam sheet>>

Each of the foam sheets of Examples 1 to 10 and Comparative Examples 1 to 8 was left to stand for 24 hours or longer in an environment controlled at a temperature of 23°C and relative humidity of 50%, following by cutting out a test piece of 50 mm × 50 mm from the foam sheet. A basis weight of the foam sheet was calculated from the measured mass of the sample according to the following equation (2). The basis weight of the foam sheet was the arithmetic mean of values measured at three or more points along the extrusion direction (MD) of the foam sheet and three or more points along the direction (TD) perpendicular to the MD.

$$\text{Basis weight } [g/m^2] = \text{measured mass } [g]/(0.05 \text{ m} \times 0.05 \text{ m})$$

$$\text{Equation (2)}$$

<<Measurement of cold crystallization enthalpy of foam sheet>>

Each of the foam sheets (approximately 10 mg) of Examples 1 to 10 and Comparative Examples 1 to 8 was collected. The collected foam sheet was pressed on a hot plate heated at 65°C with a round copper bar (diameter of approximately 20 mm, similarly heated at 65°C) at the load of 500 gf for 1 second to 3 seconds to flatten the foam sheet to prepare a sample. The prepared sample was measured by the following measuring device under the following measuring conditions, and then analyzed by the following analysis method. The series of the processes from the preparation of the sample to the analysis was performed five times, and the arithmetic mean of the obtained values was determined as cold crystallization enthalpy.

[[Measuring device and measuring conditions]]

Device: Q-2000 (available from TA Instruments Japan Inc.)
Temperature program: Scanning from 25°C to 200°C at a heating rate of 10 °C/min (1st heating). After retaining temperature at 200°C for 1 minute, scanning from 200°C to 25°C at a cooling rate of 10 °C/min (1st cooling).
Analysis of cold crystallization enthalpy: The area of the endothermic peak derived from melting of the crystal observed in the range of 60°C to 100°C during the 1st heating was determined by integration, and the obtained area was determined as cold crystallization enthalpy. In the present disclosure, the position of the endothermic peak derived from the melting of the crystal is in an approximate range of 130°C to 180°C. The baseline of the integration is a straight line connecting the points on the curve before and after the endothermic peak.

<<Measurement of recrystallization enthalpy of foam sheet>>

Approximately 10 mg of each of the foam sheets of Examples 1 to 10 and Comparative Examples 1 to 8 was collected, and the collected foam sheet was pressed on a hot plate heated at 65°C with a round copper bar (diameter of approximately 20 mm, similarly heated at 65°C) (with a load of approximately 500 gf) for 1 second to 3 seconds to flatten the foam sheet to prepare a sample. The prepared sample was measured by the following measuring device under the following measuring conditions, and was analyzed by the following analysis method. The series of the processes from the preparation of the sample to the analysis was performed five times, and the arithmetic mean of the obtained values was determined as recrystallization enthalpy.

[[Measuring device and measuring conditions]]

Device: Q-2000 (available from TA Instruments Japan Inc.)
Temperature program: Scanning from 25°C to 200°C at a heating rate of 10 °C/min (1st heating). After retaining temperature at 200°C for 1 minute, scanning from 200°C to 25°C at a cooling rate of 10 °C/min (1st cooling).
Analysis of recrystallization enthalpy: The area of the exothermic peak derived from crystallization observed during the 1st cooling was determined by integration, and the obtained area was determined as recrystallization enthalpy. In the present disclosure, the position of the exothermic peak derived from the crystallization is in an approximate range of 100°C to 130°C. The baseline of the integration is a straight line connecting the points on the curve before and after the exothermic peak.

<Evaluations>

The foam sheets of Examples 1 to 10 and Comparative Examples 1 to 8 were each evaluated on "moldability," "biodegradability," "thermal resistance," "thermal insulation properties," and "strength" in the following manner. The evaluation results are presented in Tables 1 to 4.

As described above, foam sheets could not be formed in Comparative Examples 2 and 3, thus moldability could not be evaluated, and evaluations other than biodegradability were not performed. As described above, moreover, the foam sheet was torn during the molding in Comparative Example 4, thus evaluations other than biodegradability were not performed. In Tables 1 to 4, a column where the evaluation could not be performed was marked as "N.D." and a column where the evaluation was not performed was left as blank.

<<Moldability>>

Each of the foam sheets of Examples 1 to 10 and Comparative Examples 1 to 8 was molded into a box-shaped container of 150 mm (length) × 100 mm (width) × 50 mm (depth) by thermoforming using a vacuum molding machine equipped with upper and lower IR heaters and a matched-die mold to thereby obtain a molded product. Specifically, immediately after heating the foam sheet by the IR heaters for 4.5 seconds so that the surface temperature of the foam sheet was 80°C, the foam sheet was vacuum-molded for 10 seconds with the mold heated at 110°C.

The obtained molded product was observed by an evaluator with the naked eye, and the moldability was evaluated based on the following evaluation criteria. As the evaluation result, "Good" is the most preferred, and "Good" and "Fair" are acceptable levels. Since the foam sheets could not be formed in Comparative Examples 2 and 3, results for Comparative Examples 2 and 3 are indicated as "N.D."

-Evaluation criteria for moldability-

Good: There was no tear or crease, and a shape of the mold including corners was suitably transferred.
Fair: There was no tear or crease, but the depth of the container was 80% or greater and 90% or less of the depth of the mold.
Not good: There was a tear, or the depth of the container was less than 80% of the depth of the mold.

<<Biodegradability>>

The biodegradability of each of the foam sheets of Examples 1 to 10 and Comparative Examples 1 to 8 was measured according to JIS K 6953-2:2010 (Determination of the ultimate aerobic biodegradability of plastic materials under controlled composting conditions-Method by analysis of evolved carbon dioxide-Part 2: Gravimetric measurement of carbon dioxide evaporated in a laboratory-scale test), and the result was evaluated based on the following evaluation criteria. As the evaluation result, "Good" is the most preferred, and "Good" is an acceptable level.

-Evaluation criteria of biodegradability-

Good: The biodegradability was 60% or greater within 6 months.
Not good: The biodegradability was less than 60% within 6 months.

«Thermal resistance»

Water of 25°C was poured into each of the box-shaped containers prepared for the evaluation of moldability (the molded products of the foam sheets of Examples 1 to 10 and Comparative Examples 1 to 8) up to the top edge of the opening of the container. A mass of the water inside the molded product was measured, and the measured value was converted into a volume using the density of water at 25°C. The converted value was determined as an "initial volume" of the molded product.
Next, each of the molded products of the foam sheets of Examples 1 to 10 and Comparative Examples 1 to 8 was heated at 120°C for 10 minutes. After heating the molded product, water of 25°C was poured into the molded product up to the top edge of the opening. A mass of the water inside the molded product was measured, and the measured value was converted into a volume using the density of water at 25°C. The converted value was determined as a "post-heating volume" of molded product.
A volume change rate before and after heating of the molded product was calculated according to the following equation (13). The volume change rate was evaluated as an index for thermal resistance of the molded product based on the following evaluation criteria. As the evaluation result, "Good" is the most preferred, and "Good" and "Fair" are acceptable levels.

```
Volume change rate (%) = (initial volume - post-heating
volume)/initial volume × 100
                                                Equation (13)
```

-Evaluation criteria for thermal resistance-

Good: The volume change rate was less than 3%.
Fair: The volume change rate was 3% or greater and less than 10%.
Not good: The volume change rate was 10% or greater, or the container was deformed to the extent that the original shape was not recognized.

«Thermal insulation properties»

A test piece of 50 mm × 50 mm was cut out from each of the foam sheets of Examples 1 to 10 and Comparative Examples 1 to 8. The cut-out test piece was placed on a hot plate heated at 100°C and was left to stand for three minutes. After standing, a surface temperature of a surface of the test piece that was at the opposite side to the heated surface was measured by a contact thermometer, while paying close attention not to squeeze the foam sheet. The surface temperature of the foam sheet was evaluated as an index for thermal insulation properties based on the following evaluation criteria. As the evaluation result, "Very good" is the most preferred, and "Very good," "Good," and "Fair" are acceptable levels.

-Evaluation criteria for thermal insulation properties-

Very good: The surface temperature of the foam sheet was 50°C or lower.
Good: The surface temperature of the foam sheet was higher than 50°C and 60°C or lower.
Fair: The surface temperature of the foam sheet was higher than 60°C and 70°C or lower.
Not good: The surface temperature of the foam sheet was higher than 70°C.

<<Strength>>

The rim (at centers of short sides) of each of the box-shaped containers produced for the evaluation of moldability (the molded products of the foam sheets of Examples 1 to 10 and Comparative Examples 1 to 8) was supported with two bars each having a diameter of 25 mm to lift the container in the air, and 340 g of a sand bag was placed on the container supported by the bars. The degree of bending was observed by an evaluator with the naked eye, and strength was evaluated based on the following evaluation criteria. As the evaluation result, "Good" is the most preferred, and "Good" and "Fair" are acceptable levels.

-Evaluation criteria for strength-

Good: No bending was recognized with the naked eye.
Fair: Bending was recognized, but the sand bag was held.
Not good: The container was deformed, and the sand bag could not be held.

<<Comprehensive evaluation>>

The comprehensive evaluation was performed based on the evaluation results of "moldability," "biodegradability," "thermal resistance," "thermal insulation properties," and "strength," which had been evaluated based on the above-described methods, according to the following evaluation criteria. The results of the comprehensive evaluation are presented in Tables 1 to 3 below.

-Evaluation criteria for comprehensive evaluation-

Very good: The evaluation results did not include "Fair" nor "Not good", and included "Very good."
Good: The evaluation results did not include "Fair" nor "Not good", but also did not include "Very good."
Fair: The evaluation results did not include "Not good," and included "Fair."
Not good: The evaluation results included "Not good."

Table 1-1

| | | | Ex. 1 | Ex. 2 | Ex. 3 | Ex. 4 | Ex. 5 |
|---|---|---|---|---|---|---|---|
| Composition [parts by mass] | Polylactic acid resin | PLA-A | 98.1 | 98.1 | | | |
| | | PLA-B | | | 98.1 | 97.0 | |
| | | PLA-C | | | | | 98.1 |
| | | PLA-D | | | | | |
| | | PLA-E | | | | | |
| | | PLA-F | | | | | |
| | | PLA-G | | | | | |
| | | PLA-H | | | | | |
| | Chain extender | G-0250SP (epoxy equivalent: 310) (Mw: 15,700) | 0.9 | | | 2.0 | |
| | | ADR-4368C (epoxy equivalent: 285) (Mw: 6,800) | | 0.9 | | | |
| | | ADR-4468 (epoxy equivalent: 310) (Mw: 7,250) | | | 0.9 | | 0.9 |
| | | G-0130SP (epoxy equivalent: 530) (Mw: 8,400) | | | | | |
| | | G-01100 (epoxy equivalent: 170) (Mw: 9,000) | | | | | |
| | | TCC-NP | | | | | |
| | Inorganic particles | RY300 (silica) | 1.0 | 1.0 | 1.0 | 1.0 | 1.0 |
| | | M-400 (mica) | | | | | |
| | Blowing agent | Carbon dioxide | 3.8 | 3.8 | 3.8 | 3.8 | 3.8 |

Table 1-2

| | | Ex. 1 | Ex. 2 | Ex. 3 | Ex. 4 | Ex. 5 |
|---|---|---|---|---|---|---|
| Polylactic acid resin | Amount of polylactic acid resin relative to total amount of organic matter [% by mass] | 99.1 | 99.1 | 99.1 | 98.0 | 99.1 |
| | Weight average molecular weight [Mw] | 243,000 | 243,000 | 206,000 | 206,000 | 249,000 |
| | Terminal OH content | 1.0 | 1.0 | 1.2 | 1.2 | 1.3 |
| | Acid value [mgkOH/g] | 3.0 | 3.0 | 4.2 | 4.2 | 2.5 |
| | Molar ratio (L-lactic acid:D-lactic acid) [mol%] | 98.7:1.3 | 98.7:1.3 | 99.1:0.9 | 99.1:0.9 | 99.1:0.9 |
| | Melting point [°C] | 168.7 | 168.7 | 169.8 | 169.8 | 169.6 |
| Foam sheet | Bulk density [g/cm³] | 0.09 | 0.11 | 0.16 | 0.21 | 0.25 |
| | Basis weight [g/m²] | 266 | 277 | 268 | 262 | 278 |
| | Cold crystallization enthalpy [J/g] | 32 | 35 | 34 | 28 | 35 |
| | Recrystallization enthalpy [J/g] | 42 | 42 | 41 | 35 | 42 |

(continued)

| Evaluation results | | | Ex. 1 | Ex. 2 | Ex. 3 | Ex. 4 | Ex. 5 |
|---|---|---|---|---|---|---|---|
| Evaluation results | | Moldability | Good | Good | Good | Good | Good |
| | | Biodegradability | Good | Good | Good | Fair | Good |
| | | Thermal resistance | Good | Good | Good | Good | Good |
| | | Thermal insulation properties | Very good | Very good | Good | Fair | Fair |
| | | Strength | Good | Good | Good | Fair | Fair |
| | | Comprehensive evaluation | Very good | Very good | Good | Fair | Fair |

Table 2-1

| | | | Ex. 6 | Ex. 7 | Ex. 8 | Ex. 9 | Ex. 10 |
|---|---|---|---|---|---|---|---|
| Composition [parts by mass] | Polylactic acid resin | PLA-A | | | | 98.1 | 98.1 |
| | | PLA-B | | | | | |
| | | PLA-C | | | | | |
| | | PLA-D | 98.1 | 99.1 | 98.1 | | |
| | | PLA-E | | | | | |
| | | PLA-F | | | | | |
| | | PLA-G | | | | | |
| | | PLA-H | | | | | |
| | Chain extender | G-0250SP (epoxy equivalent: 310) (Mw: 15,700) | | | | 0.9 | |
| | | ADR-4368C (epoxy equivalent: 285) (Mw: 6,800) | | | | | |
| | | ADR-4468 (epoxy equivalent: 310) (Mw: 7,250) | 0.9 | 0.9 | 0.9 | | |
| | | G-0130SP (epoxy equivalent: 530) (Mw: 8,400) | | | | | |
| | | G-01100 (epoxy equivalent: 170) (Mw: 9,000) | | | | | 0.9 |
| | | TCC-NP | | | | | |
| | Inorganic particles | RY300 (silica) | 1.0 | | | 1.0 | 1.0 |
| | | M-400 (mica) | | | 1.0 | | |
| | Blowing agent | Carbon dioxide | 3.8 | 3.8 | 3.8 | 4.8 | 3.8 |

Table 2-2

|  |  | Ex. 6 | Ex. 7 | Ex. 8 | Ex. 9 | Ex. 10 |
|---|---|---|---|---|---|---|
| Polylactic acid resin | Amount of polylactic acid resin relative to total amount of organic matter [% by mass] | 99.1 | 99.1 | 99.1 | 99.1 | 99.1 |
|  | Weight average molecular weight [Mw] | 307,000 | 307,000 | 307,000 | 243,000 | 243,000 |
|  | Terminal OH content | 0.9 | 0.9 | 0.9 | 1.0 | 1.0 |
|  | Acid value [mgkOH/g] | 2.3 | 2.3 | 2.3 | 3.0 | 3.0 |
|  | Molar ratio (L-lactic acid:D-lactic acid) [mol%] | 99.1:0.9 | 99.1:0.9 | 99.1:0.9 | 98.7:1.3 | 98.7:1.3 |
|  | Melting point [°C] | 169.8 | 169.8 | 169.8 | 169.1 | 168.7 |
| Foam sheet | Bulk density [g/cm$^3$] | 0.16 | 0.14 | 0.10 | 0.11 | 0.21 |
|  | Basis weight [g/m$^2$] | 280 | 262 | 262 | 275 | 275 |
|  | Cold crystallization enthalpy [J/g] | 33 | 31 | 30 | 21 | 30 |
|  | Recrystallization enthalpy [J/g] | 39 | 42 | 41 | 42 | 39 |
| Evaluation results | Moldability | Good | Good | Good | Fair | Good |
|  | Biodegradability | Good | Good | Good | Good | Good |
|  | Thermal resistance | Good | Good | Good | Fair | Good |
|  | Thermal insulation properties | Good | Fair | Very good | Very good | Fair |
|  | Strength | Good | Good | Good | Good | Fair |
|  | Comprehensive evaluation | Good | Fair | Very good | Fair | Fair |

Table 3-1

| | | | Comp. Ex. 1 | Comp. Ex. 2 | Comp. Ex. 3 | Comp. Ex. 4 | Comp. Ex. 5 |
|---|---|---|---|---|---|---|---|
| Composition [parts by mass] | Polylactic acid resin | PLA-A | | 100 | | 98.1 | |
| | | PLA-B | | | | | |
| | | PLA-C | | | | | |
| | | PLA-D | | | | | |
| | | PLA-E | 98.1 | | | | |
| | | PLA-F | | | 98.1 | | |
| | | PLA-G | | | | | 98.1 |
| | | PLA-H | | | | | |
| | Chain extender | G-0250SP (epoxy equivalent: 310) (Mw: 15,700) | | | | 0.9 | |
| | | ADR-4368C (epoxy equivalent: 285) (Mw: 6,800) | | | | | |
| | | ADR-4468 (epoxy equivalent: 310) (Mw: 7,250) | 0.9 | | 0.9 | | 0.9 |
| | | G-0130SP (epoxy equivalent: 530) (Mw: 8,400) | | | | | |
| | | G-01100 (epoxy equivalent: 170) (Mw: 9,000) | | | | | |
| | | TCC-NP | | | | | |
| | Inorganic particles | RY300 (silica) | 1.0 | | 1.0 | 1.0 | 1.0 |
| | | M-400 (mica) | | | | | |
| | Blowing agent | Carbon dioxide | 3.8 | 3.8 | 3.8 | 3.8 | 3.8 |

Table 3-2

| | | Comp. Ex. 1 | Comp. Ex. 2 | Comp. Ex. 3 | Comp. Ex. 4 | Comp. Ex. 5 |
|---|---|---|---|---|---|---|
| Polylactic acid resin | Amount of polylactic acid resin relative to total amount of organic matter [% by mass] | 99.1 | 1000.0 | 99.1 | 99.1 | 99.1 |
| | Weight average molecular weight [Mw] | 229,000 | 243,000 | 175,000 | 243,000 | 241,000 |
| | Terminal OH content | 1.5 | 1.0 | 1.9 | 1.0 | 1.4 |
| | Acid value [mgkOH/g] | 2.1 | 3.0 | 11.0 | 3.0 | 3.0 |
| | Molar ratio (L-lactic acid:D-lactic acid) [mol%] | 99.1:0.9 | 98.7:1.3 | 99.1:0.9 | 98.7:1.3 | 96.0:4.0 |
| | Melting point [°C] | 169.5 | 169.1 | 169.6 | 169.1 | 157.8 |

(continued)

| | | Comp. Ex. 1 | Comp. Ex. 2 | Comp. Ex. 3 | Comp. Ex. 4 | Comp. Ex. 5 |
|---|---|---|---|---|---|---|
| Foam sheet | Bulk density [g/cm$^3$] | 0.83 | 1.04 | 1.04 | 0.09 | 0.60 |
| | Basis weight [g/m$^2$] | 278 | 293 | 283 | 258 | 275 |
| | Cold crystallization enthalpy [J/g] | 38 | 18 | 38 | 15 | 15 |
| | Recrystallization enthalpy [J/g] | 36 | 13 | 42 | 42 | 15 |
| Evaluation results | Moldability | Good | N.D. | N.D. | Not good | Good |
| | Biodegradability | Good | Good | Good | Good | Good |
| | Thermal resistance | Fair | | | | Not good |
| | Thermal insulation properties | Not good | | | | Not good |
| | Strength | Not good | | | | Not good |
| | Comprehensive evaluation | Not good | Not good | Not good | Not good | Not good |

Table 4-1

| | | | Comp. Ex. 6 | Comp. Ex. 7 | Comp. Ex. 8 |
|---|---|---|---|---|---|
| Composition [parts by mass] | Polylactic acid resin | PLA-A | | 98.1 | 98.1 |
| | | PLA-B | | | |
| | | PLA-C | | | |
| | | PLA-D | | | |
| | | PLA-E | | | |
| | | PLA-F | | | |
| | | PLA-G | | | |
| | | PLA-H | 98.1 | | |
| | Chain extender | G-0250SP (epoxy equivalent: 310) (Mw: 15,700) | | | |
| | | ADR-4368C (epoxy equivalent: 285) (Mw: 6,800) | | | |
| | | ADR-4468 (epoxy equivalent: 310) (Mw: 7,250) | 0.9 | | |
| | | G-0130SP (epoxy equivalent: 530) (Mw: 8,400) | | 0.9 | |
| | | G-01100 (epoxy equivalent: 170) (Mw: 9,000) | | | |
| | | TCC-NP | | | 1 |
| | Inorganic particles | RY300 (silica) | 1.0 | 1.0 | 1.0 |
| | | M-400 (mica) | | | |
| | Blowing agent | Carbon dioxide | 3.8 | 3.8 | 3.8 |

Table 4-2

| | | Comp. Ex. 6 | Comp. Ex. 7 | Comp. Ex. 8 |
|---|---|---|---|---|
| Polylactic acid resin | Amount of polylactic acid resin relative to total amount of organic matter [% by mass] | 99.1 | 99.1 | 99.0 |
| | Weight average molecular weight [Mw] | 330,000 | 243,000 | 243,000 |
| | Terminal OH content | 0.2 | 1.0 | 1.0 |
| | Acid value [mgkOH/g] | 2.1 | 3.0 | 3.0 |
| | Molar ratio (L-lactic acid:D-lactic acid) [mol%] | 99.0:1.0 | 98.7:1.3 | 98.7:1.3 |
| | Melting point [°C] | 168.9 | 168.7 | 168.7 |
| Foam sheet | Bulk density [g/cm$^3$] | 0.69 | 0.83 | 0.74 |
| | Basis weight [g/m$^2$] | 285 | 310 | 295 |
| | Cold crystallization enthalpy [J/g] | 24 | 23 | 21 |
| | Recrystallization enthalpy [J/g] | 28 | 30 | 28 |
| Evaluation results | Moldability | Good | Good | Fair |
| | Biodegradability | Good | Good | Good |
| | Thermal resistance | Not good | Not good | Not good |
| | Thermal insulation properties | Not good | Not good | Not good |
| | Strength | Not good | Not good | Not good |
| | Comprehensive evaluation | Not good | Not good | Not good |

For example, embodiments of the present disclosure are as follows.

<1> A foam sheet includes:
a polylactic acid resin composition that includes a polylactic acid resin and an epoxy group-containing compound including two or more epoxy groups per molecule,

wherein the polylactic acid resin has a weight average molecular weight of 180,000 or greater and 320,000 or less, the polylactic acid resin has a terminal hydroxyl group content of 0.3 or greater and 1.4 or less, an amount of the polylactic acid resin is 98% by mass or greater relative to a total amount of organic matter of the foam sheet, the epoxy group-containing compound has an epoxy equivalent of 170 or greater and 350 or less, the foam sheet has cold crystallization enthalpy of 20 J/g or greater, and the foam sheet has recrystallization enthalpy of 20 J/g or greater.

<2> The foam sheet according to <1>, further including:
inorganic particles that are at least one selected from the group consisting of silica, talc, and mica.
<3> The foam sheet according to <1> or <2>, wherein the foam sheet has a bulk density of 0.063 g/cm$^3$ to 0.25 g/cm$^3$.
<4> The foam sheet according to any one of <1> to <3>, wherein the foam sheet has a basis weight of 100 g/m$^2$ or greater and 300 g/m$^2$ or less.
<5> A method for producing the foam sheet of any one of <1> to <4>, the method including:

kneading the polylactic acid resin composition in the presence of a blowing agent that is carbon dioxide, an amount of the blowing agent being 2 parts by mass or greater and 5 parts by mass or less relative to 100 parts by mass of the polylactic acid resin composition; and
vaporizing and removing the blowing agent from the polylactic acid resin composition to foam the polylactic acid resin composition.

<6> A product including:
a product main body, an entire part or a part of which includes the foam sheet of any one of <1> to <4>.

<7> A molded product including:
the foam sheet of any one of <1> to <4> having a shape achieved by thermoforming.

The foam sheet according to any one of <1> to <4>, the method according to <5>, the product according to <6>, and the molded product according to <7> can solve the above-described various problems in the related art, and can achieve the object of the present disclosure.

**Claims**

1.  A foam sheet, comprising:
    a polylactic acid resin composition that includes a polylactic acid resin and an epoxy group-containing compound including two or more epoxy groups per molecule,

    wherein the polylactic acid resin has a weight average molecular weight of 180,000 or greater and 320,000 or less, the polylactic acid resin has a terminal hydroxyl group content of 0.3 or greater and 1.4 or less,
    an amount of the polylactic acid resin is 98% by mass or greater relative to a total amount of organic matter of the foam sheet, the epoxy group-containing compound has an epoxy equivalent of 170 or greater and 350 or less, the foam sheet has cold crystallization enthalpy of 20 J/g or greater, and
    the foam sheet has recrystallization enthalpy of 20 J/g or greater.

2.  The foam sheet according to claim 1, further comprising:
    inorganic particles that are at least one selected from the group consisting of silica, talc, and mica.

3.  The foam sheet according to claim 1 or 2,
    wherein the foam sheet has a bulk density of 0.063 $g/cm^3$ to 0.25 $g/cm^3$.

4.  The foam sheet according to any one of claims 1 to 3,
    wherein the foam sheet has a basis weight of 100 $g/m^2$ or greater and 300 $g/m^2$ or less.

5.  A method for producing the foam sheet of any one of claims 1 to 4, the method comprising:

    kneading the polylactic acid resin composition in the presence of a blowing agent that is carbon dioxide, an amount of the blowing agent being 2 parts by mass or greater and 5 parts by mass or less relative to 100 parts by mass of the polylactic acid resin composition; and
    vaporizing and removing the blowing agent from the polylactic acid resin composition to foam the polylactic acid resin composition.

6.  A product, comprising:
    a product main body, an entire part or a part of which includes the foam sheet of any one of claims 1 to 4.

7.  A molded product, comprising:
    the foam sheet any one of claims 1 to 4 having a shape achieved by thermoforming.

# FIG.1

# FIG.2

# FIG.3

Europäisches
Patentamt

European
Patent Office

Office européen
des brevets

## EUROPEAN SEARCH REPORT

Application Number

EP 24 15 8728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/161467 A1 (NEMOTO TAICHI [JP] ET AL) 26 May 2022 (2022-05-26) <br> * paragraphs [0038], [0105]; examples 5, 6 * <br> * paragraphs [0001], [0117] - [0119], [0133] * <br> ----- | 1-7 | INV. <br> C08J9/00 <br> C08G63/91 <br> C08J9/12 |
| X,P | EP 4 249 544 A1 (RICOH CO LTD [JP]) 27 September 2023 (2023-09-27) <br> * paragraph [0120]; example 1; table 1 * <br> ----- | 1-7 | |

TECHNICAL FIELDS
SEARCHED        (IPC)

C08J
C09J
C08G

The present search report has been drawn up for all claims

| Place of search | Date of completion of the search | Examiner |
|---|---|---|
| The Hague | 19 July 2024 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8728

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | Publication date |
|---|---|---|---|
| US 2022161467 A1 | 26-05-2022 | CN 114539745 A<br>EP 4001351 A1<br>JP 2022180468 A<br>US 2022161467 A1 | 27-05-2022<br>25-05-2022<br>06-12-2022<br>26-05-2022 |
| EP 4249544 A1 | 27-09-2023 | EP 4249544 A1<br>JP 2023140753 A<br>US 2023303830 A1 | 27-09-2023<br>05-10-2023<br>28-09-2023 |

EPO FORM P0459

For more details about this annex : see Official Journal of the European Patent Office, No. 12/82

## REFERENCES CITED IN THE DESCRIPTION

**Patent documents cited in the description**

- JP 2011016941 A
- JP 2009073955 A
- JP 2008231285 A

**Non-patent literature cited in the description**

- **YOSHIO INOUE.** Structure, properties, and biodegradability of aliphatic polyesters. *POLYMERS,* 2001, vol. 50 (6), 374-377